# EUROPEAN PATENT SPECIFICATION

(11) **EP 4 063 095 B1**
(45) Date of publication and mention of the grant of the patent: **17.06.2026**
(21) Application number: 20889057.4
(22) Date of filing: 18.11.2020
(51) Int. Cl.: B29C 45/00, C08K 5/544, C08K 7/14, C08L 81/02, C08G 75/0259, C08G 75/0281

(54) **POLYPHENYLENE SULFIDE RESIN COMPOSITION FOR AUTOMOTIVE COOLING PARTS, AND AUTOMOTIVE COOLING PARTS**
POLYPHENYLENSULFIDHARZZUSAMMENSETZUNG FÜR KRAFTFAHRZEUGKÜHLTEILE UND KRAFTFAHRZEUGKÜHLTEILE
COMPOSITION DE RÉSINE DE SULFURE DE POLYPHÉNYLÈNE POUR COMPOSANT DE REFROIDISSEMENT AUTOMOBILE, ET COMPOSANT DE REFROIDISSEMENT AUTOMOBILE

(30) Priority: 19.11.2019 JP 2019208930
(43) Date of publication of application: 28.09.2022
(73) Proprietor: Toray Industries, Inc., Tokyo 103-8666 (JP)
(72) Inventor: KONDO, Shunsuke, Nagoya-shi, Aichi 455-8502 (JP); OKUBO, Kazuya, Nagoya-shi, Aichi 455-8502 (JP); FUKUYASU, Koki, Nagoya-shi, Aichi 455-8502 (JP)
(74) Representative: Mewburn Ellis LLP
(86) International application number: PCT/JP2020/042996
(87) International publication number: WO 2021/100757

(56) References cited:
- EP-A1- 2 762 530
- EP-A1- 2 829 577
- EP-A1- 3 231 844
- EP-A1- 3 450 505
- JP-A- 2006 219 666
- JP-A- 2007 308 612
- JP-A- 2010 195 874
- JP-A- 2011 153 242
- JP-A- 2011 153 242
- JP-A- 2016 121 263
- JP-A- 2017 155 221
- JP-A- 2018 141 149
- JP-A- H0 641 425
- JP-A- H06 116 494
- US-A- 4 528 310
- US-A1- 2013 156 565
- US-A1- 2019 270 886

## Description

### Technical Field

The present invention relates to: a PPS resin composition for automotive cooling parts, which has an exceptionally high coolant resistance while maintaining a high mechanical strength, and inhibits the generation of mold deposit (deposit adhering to a mold surface); and an automotive cooling part obtained by injection molding.

### Background Art

Polyphenylene sulfide resins (hereinafter, referred to as "PPS resins") have a good balance of rigidity, heat resistance, hot water resistance, chemical resistance and molding processability, and are thus widely used in electric and electronic components, plumbing components, and automobile components.

These applications require mechanical strength and, for example, PPS resin compositions in which a PPS resin is reinforced with glass fibers and a silane compound having a functional group such as an epoxy group is incorporated have been proposed.

In recent automobiles, there is a growing demand for space saving in the engine room due to increase in the number of components to be installed. Accordingly, each component has been reduced in size, and the development is shifting toward modules in which plural components are combined and plural functions are integrated, rather than individual components. As a result, components are reduced in thickness and have complex shapes; therefore, a high mechanical strength is required.

In automotive cooling parts, PPS resin compositions having excellent coolant resistance are used since a liquid such as a coolant flows in contact with the inner wall surface, and such PPS resin compositions are exposed to more severe environments in association with improvement in the performance of products; therefore, a higher coolant resistance is required than ever before.

Meanwhile, although a PPS resin has a high melting point and excellent heat resistance, its processing temperature in injection molding is high; therefore, the PPS resin and its additives cause generation of mold deposit, resulting in problems such as defective outer appearance of the resulting molded article and a reduction in the dimensional accuracy of the molded article, as well as a reduction in the productivity due to disassembly and cleaning of a mold.

Particularly, automotive cooling parts have been installed in many automobiles from the standpoint of improving the engine fuel efficiency and optimizing the battery performance, and an improvement in the yield and an improvement in the productivity present a great challenge.

Accordingly, a PPS resin composition for automotive cooling parts, which not only has hot water resistance and coolant resistance in addition to mechanical strength but also inhibits the generation of mold deposit, is demanded.

### Citation List; Patent Literature

For example, Patent Literature 1 and 2 disclose PPS resin compositions in which a linear PPS resin is reinforced with glass fibers and a silane compound is incorporated. Further, Patent Literature 3 discloses a PPS resin composition in which glass fibers and a silane compound are incorporated into a PPS resin obtained by polymerizing a low-water-content alkali metal sulfide, which is prepared through a specific treatment, in contact with a dihalogenated aromatic compound in an organic polar solvent. Moreover, Patent Literature 4 discloses a PPS resin composition in which glass fibers and a silane compound are incorporated into a PPS resin obtained by mixing a crosslinked high-molecular-weight PPS resin and a non-crosslinked low-molecular-weight PPS resin.
[Patent Literature 1] JP 2011-153242A
[Patent Literature 2] JP 2010-195874A
[Patent Literature 3] JP 2006-219666A
[Patent Literature 4] JP H6-41425A
[Patent Literature 5] US 2019/0270886 A1
[Patent Literature 6] US 4,528,310
[Patent Literature 7] JP 2016-121263 A
[Patent Literature 8] EP 3231844 A
[Patent Literature 9] US 2013/0156565 A1
[Patent Literature 10] EP 2762530 A1
[Patent Literature 11] JP 06116494
[Patent Literature 12] EP 3450505 A1
[Patent Literature 13] EP 2829577 A1

### Summary of Invention

### Technical Problem

However, in Patent Literature 1 and 2, although the mechanical strength is described, the coolant resistance is not concretely examined, and inhibition of the generation of mold deposit is not satisfied. In Patent Literature 3, although the mechanical strength is described, the coolant resistance is neither examined concretely nor satisfied. Further, in Patent Literature 4, although the mechanical strength is described, the coolant resistance is not concretely examined, and neither the coolant resistance nor an effect inhibiting the generation of mold deposit is satisfied. Patent Literatures 5, 7 and 10 concern particular poly(phenylene sulfide) resin compositions; Patent Literature 6 concerns glass-filled poly(arylene sulfide) compositions containing organosilanes; Patent Literatures 8, 12 and 13 concern particular polyarylene sulfide resin compositions; Patent Literature 9 disscloses a boron-containing nucleating agent for use with a polyarylene sulfide; and Patent Literature 11 concerns a particular resin composition for a part related to an automobile water pump.

The present invention provides: a PPS resin composition for automotive cooling parts, which has an exceptionally high coolant resistance while maintaining a high mechanical strength, and inhibits the generation of mold deposit; and an automotive cooling part obtained by injection molding.

### Solution to Problem

The polyphenylene sulfide resin composition for automotive cooling parts according to the present invention has the following constitution to solve the above-described problems. That is, the polyphenylene sulfide resin composition for automotive cooling parts according to the present invention contains, with respect to 100 parts by weight of a polyphenylene sulfide resin (A): 30 to 110 parts by weight of glass fibers (B); and 0.1 to 3 parts by weight of a silane compound (C) having a functional group selected from an amino group and an isocyanate group, in which the polyphenylene sulfide resin (A) has a number-average molecular weight of 7,000 to 14,000, the polyphenylene sulfide resin (A) including a polyphenylene sulfide resin that has been heat treated under an oxygen concentration of 2% by volume or lower, at a temperature of 210 to 270°C for a period of 0.2 to 50 hours, and gives a residue amount of 2.0 to 5.0% by weight when dissolved in 20-fold amount by weight of 1-chloronaphthalene at 250°C for 5 minutes and subsequently subjected to heat pressure filtration through a PTFE membrane filter having a pore size of 1 µm.

The automotive cooling part according to the present invention has the following constitution. That is, the automotive cooling part according to the present invention is an automotive cooling part composed of the above-described polyphenylene sulfide resin composition.

The polyphenylene sulfide resin composition for automotive cooling parts according to the present invention preferably has a melt crystallization peak temperature of 230°C or higher.

The polyphenylene sulfide resin composition for automotive cooling parts according to the present invention preferably satisfies both of the following conditions (i) and (ii):
(i) a Type A1 test piece defined in ISO 20753 (hereinafter, referred to as "ISO test piece"), which is obtained by injection-molding the polyphenylene sulfide resin composition, has a tensile strength of 190 MPa or higher as measured in accordance with ISO 527-1 and 527-2 at a tensile speed of 5 mm/min and an atmospheric temperature of 23°C; and
(ii) when the ISO test piece is immersed in a 150°C coolant for 500 hours and subsequently measured in accordance with ISO 527-1 and 527-2 at a tensile speed of 5 mm/min and an atmospheric temperature of 23°C, the ISO test piece has a tensile strength retention rate is 80% or higher.

The automotive cooling part according to the present invention preferably includes a combination of: a housing obtained by injection-molding the above-described polyphenylene sulfide resin composition; and at least two pipes.

The automotive cooling part according to the present invention also preferably includes a combination of: a housing obtained by injection-molding the above-described polyphenylene sulfide resin composition; a valve; and at least three pipes.

The present invention also provides use of the above-described polyethylene composition for providing high mechanical strength and high coolant resistance and inhibiting the generation of mold deposit on an automative cooling part. Preferably, the automotive cooling part is the above-described automotive cooling part.

The present invention also provides a method for preparing the above-described polyphenylene sulfide resin composition, the method comprising preparing a polyphenylene sulfide resin, the preparation including a pre-processing step, a polymerization step, a recovery step in which a solid PPS resin is recovered from the polymerization reaction step, and a post-treatment step, the post-treatment step comprising subjecting the polyphenylene sulfide resin to heat treatment under an oxygen concentration of 2% by volume or lower, at a temperature of 210 to 270°C for a period of 0.2 to 50 hours.

### Advantageous Effects of Invention

The present inventors discovered unknown properties that a polyphenylene sulfide resin composition containing a PPS resin, glass fibers, and a silane compound having a specific functional group, in which the PPS resin has a number-average molecular weight of 7,000 to 14,000, the polyphenylene sulfide resin (A) including a polyphenylene sulfide resin that has been heat treated under an oxygen concentration of 2% by volume or lower, at a temperature of 210 to 270°C for a period of 0.2 to 50 hours, and the above-described PPS resin gives a residue amount of 2.0 to 5.0% by weight when dissolved in 20-fold amount by weight of 1-chloronaphthalene at 250°C for 5 minutes and subsequently subjected to heat pressure filtration through a PTFE membrane filter having a pore size of 1 µm, has a high mechanical strength and a high coolant resistance and inhibits the generation of mold deposit. The PPS resin composition of the present invention is useful for automotive cooling parts, particularly small-sized and complex-shaped automotive cooling parts that include a combination of plural components.

### Brief Description of the Drawings

[FIG. 1] FIG. 1 shows schematic drawings that illustrate an automotive cooling part including a combination of a housing and at least two pipes, with (a) being a top view and (b) being a side view.
[FIG. 2] FIG. 2 is a schematic drawing that illustrates an automotive cooling part including a combination of a housing, a valve, and at least three pipes.

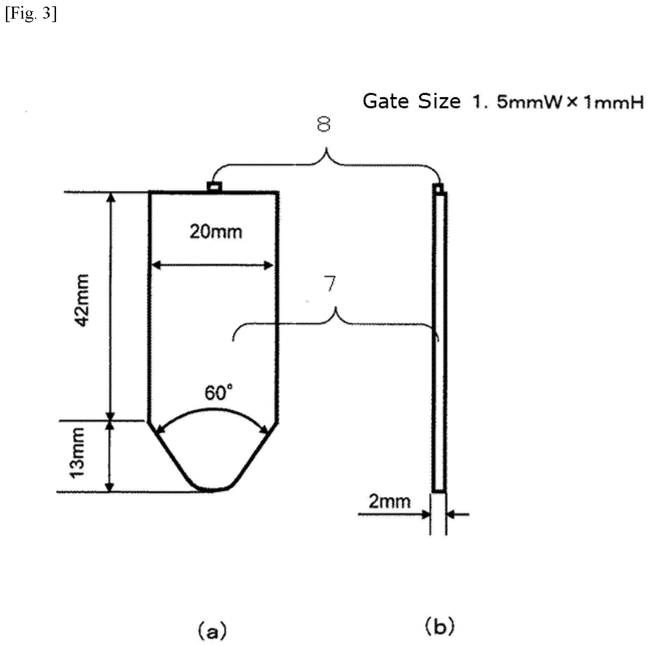

[FIG. 3] FIG. 3 shows schematic drawings that illustrate a molding for evaluating mold deposit, with (a) being a top view and (b) being a side view. Description of Embodiments

Embodiments of the present invention will now be described. In the present invention, "weight" means "mass".

The resin composition of the present invention needs to be heat-resistant and is thus a composition that contains a polyphenylene sulfide resin (hereinafter, referred to as "PPS resin").

The PPS resin (A) used in the present invention is a polymer having a repeating unit represented by the following structural formula:

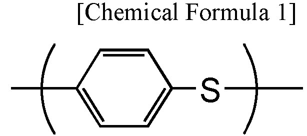

From the standpoint of heat resistance, the PPS resin is a polymer that contains a repeating unit represented by the above-described structural formula in an amount of preferably not less than 70% by mole, more preferably not less than 90% by mole. In the PPS resin, less than about 30% by mole of its repeating unit may be composed of, for example, repeating units having the following structures:

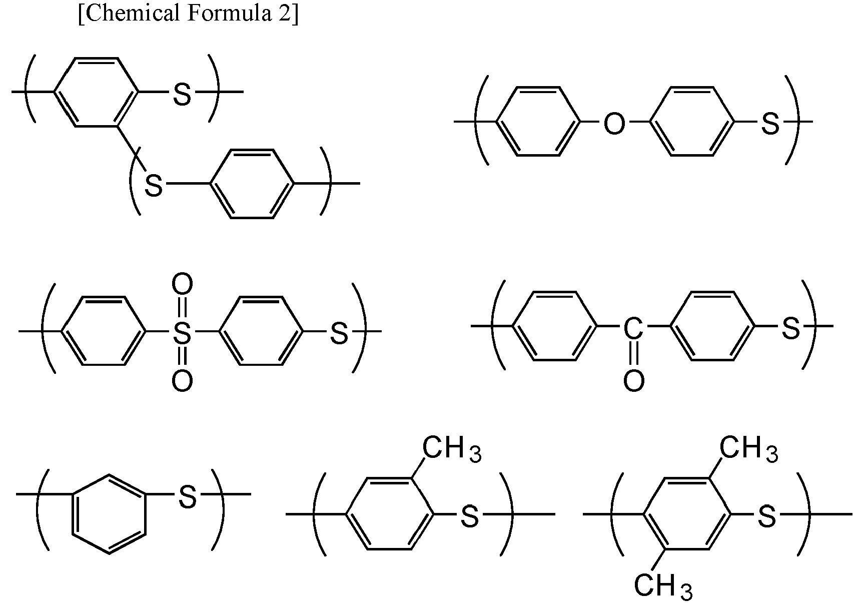

The details of a polyhalogenated aromatic compound, a sulfidizing agent, a polymerization solvent, a molecular weight modifier, a polymerization modifier, and a polymerization stabilizer, which are used in the production method of the present invention, will now be described.

### [Polyhalogenated Aromatic Compound]

The term "polyhalogenated aromatic compound" used herein refers to a compound having two or more halogen atoms in one molecule. Specific examples thereof include polyhalogenated aromatic compounds such asp-dichlorobenzene, m-dichlorobenzene, o-dichlorobenzene, 1,3,5-trichlorobenzene, 1,2,4-trichlorobenzene, 1,2,4,5-tetrachlorobenzene, hexachlorobenzene, 2,5-dichlorotoluene, 2,5-dichloro-p-xylene, 1,4-dibromobenzene, 1,4-diiodobenzene, and 1-methoxy-2,5-dichlorobenzene, among which *p*-dichlorobenzene is preferably used. Further, two or more different polyhalogenated aromatic compounds can be combined and used as a copolymer, and this copolymer preferably contains a *p*-dihalogenated aromatic compound as a main component.

From the standpoint of obtaining a PPS resin having a viscosity suitable for processing, the amount of a polyhalogenated aromatic compound to be used is, for example, in a range of 0.9 to 2.0 mol, preferably 0.95 to 1.5 mol, more preferably 1.005 to 1.2 mol, per 1 mol of a sulfidizing agent.

### [Sulfidizing Agent]

The sulfidizing agent is, for example, an alkali metal sulfide, an alkali metal hydrosulfide, or hydrogen sulfide.

Specific examples of the alkali metal sulfide include lithium sulfide, sodium sulfide, potassium sulfide, rubidium sulfide, cesium sulfide, and mixtures of two or more thereof, among which sodium sulfide is preferably used. Any of these alkali metal sulfides can be used in the form of a hydrate, an aqueous mixture, or an anhydride.

Specific examples of the alkali metal hydrosulfide include sodium hydrosulfide, potassium hydrosulfide, lithium hydrosulfide, rubidium hydrosulfide, cesium hydrosulfide, and mixtures of two or more thereof, among which sodium hydrosulfide is preferably used. Any of these alkali metal hydrosulfides can be used in the form of a hydrate, an aqueous mixture, or an anhydride.

A sulfidizing agent prepared *in situ* in a reaction system from an alkali metal hydrosulfide and an alkali metal hydroxide can be used as well. Further, a sulfidizing agent prepared from an alkali metal hydrosulfide and an alkali metal hydroxide and transferred to a polymerization vessel can be used.

Alternatively, a sulfidizing agent prepared *in situ* in a reaction system from hydrogen sulfide and an alkali metal hydroxide such as lithium hydroxide and sodium hydroxide can be used. Further, a sulfidizing agent prepared from hydrogen sulfide and an alkali metal hydroxide such as lithium hydroxide and sodium hydroxide and transferred to a polymerization vessel can be used.

In cases where the sulfidizing agent is partially lost prior to the initiation of polymerization reaction due to a dehydration operation, the amount of added sulfidizing agent means the amount of remaining sulfidizing agent that is calculated by subtracting the amount of the loss from the actually added amount.

It is noted here that an alkali metal hydroxide and/or an alkaline earth metal hydroxide can also be used in combination with the sulfidizing agent. Specific examples of a preferred alkali metal hydroxide include sodium hydroxide, potassium hydroxide, lithium hydroxide, rubidium hydroxide, cesium hydroxide, and mixtures of two or more of thereof, and specific examples of the alkaline earth metal hydroxide include calcium hydroxide, magnesium hydroxide, strontium hydroxide, and barium hydroxide. Thereamong, sodium hydroxide is preferably used.

When an alkali metal hydrosulfide is used as the sulfidizing agent, it is particularly preferred to use an alkali metal hydroxide at the same time, and the amount of this alkali metal hydroxide to be used is, for example, in a range of 0.95 to 1.20 mol, preferably 1.00 to 1.15 mol, more preferably 1.005 to 1.100 mol, with respect to 1 mol of the alkali metal hydrosulfide.

### [Polymerization Solvent]

As the polymerization solvent, it is preferred to use an organic polar solvent. Specific examples thereof include: N-alkylpyrrolidones, such as N-methyl-2-pyrrolidone and N-ethyl-2-pyrrolidone; caprolactams, such as *N*-methyl-*ε-*caprolactam; aprotic organic solvents typified by 1,3-dimethyl-2-imidazolidinone, N,N-dimethylacetamide, *N*,*N*-dimethylformamide, hexamethylphosphoric triamide, dimethyl sulfone, and tetramethylene sulfoxide; and mixtures thereof, and all of these organic polar solvents have a high reaction stability and can thus be used preferably. Thereamong, *N*-methyl-2-pyrrolidone (hereinafter, may be abbreviated as "NMP") is particularly preferably used.

The amount of an organic polar solvent to be used is usually selected to be in a range of preferably 2.0 mol to 10 mol, more preferably 2.25 to 6.0 mol, still more preferably 2.5 to 5.5 mol, with respect to 1 mol of the sulfidizing agent.

### [Molecular Weight Modifier]

For the purpose of, for example, forming terminals of the resulting PPS resin or controlling the polymerization reaction and the molecular weight, a monohalogenated compound (which does not necessarily have to be an aromatic compound) may be used in combination with the above-described polyhalogenated aromatic compound.

### [Polymerization Modifier]

It is also a preferred mode to use a polymerization modifier for obtaining a PPS resin having a relatively high polymerization degree in a shorter time. The term "polymerization modifier" used herein means a substance that has an effect of increasing the viscosity of the resulting PPS resin. Specific examples of such a polymerization modifier include metal organic carboxylates, water, alkali metal chlorides, organic sulfonates, alkali metal sulfates, alkaline earth metal oxides, alkali metal phosphates, and alkaline earth metal phosphates. These polymerization modifiers can be used singly, or in combination of two or more kinds thereof. Particularly, a metal organic carboxylate and/or water can be preferably used.

The above-described metal organic carboxylates are compounds represented by a general formula R(COOM)ₙ (wherein, R represents an alkyl group, cycloalkyl group, aryl group, alkylaryl group, or arylalkyl group having 1 to 20 carbon atoms; M represents an alkali metal selected from lithium, sodium, potassium, rubidium, and cesium; and n represents an integer of 1 to 3). Any of these metal organic carboxylates can be used in the form of a hydrate, an anhydride, or an aqueous solution. Specific examples of the metal organic carboxylates include lithium acetate, sodium acetate, potassium acetate, sodium propionate, lithium valerate, sodium benzoate, sodium phenylacetate, potassium *p*-toluate, and mixtures thereof.

A metal organic carboxylate may be formed by adding substantially equal chemical equivalents of an organic acid and at least one compound selected from the group consisting of alkali metal hydroxides, alkali metal carbonates and alkali metal bicarbonates, and allowing the added materials to react with each other. Among the above-described metal organic carboxylates, sodium acetate which is inexpensive and moderately soluble in a polymerization system can be most preferably used.

When any of these polymerization modifiers is used, the amount thereof is usually in a range of 0.01 mol to 0.7 mol with respect to 1 mol of the added alkali metal sulfide and, in terms of obtaining a higher polymerization degree, it is preferably in a range of 0.1 to 0.6 mol, more preferably in a range of 0.2 to 0.5 mol.

Further, the use of water as a polymerization modifier is one of effective means for obtaining a resin composition having highly balanced flowability and toughness. In this case, the amount of water to be added is usually in a range of 0.5 mol to 15 mol with respect to 1 mol of the added alkali metal sulfide and, in terms of obtaining a higher polymerization degree, it is preferably in a range of 0.6 to 10 mol, more preferably in a range of 1 to 5 mol.

The timing of adding any of the above-described polymerization modifiers is not particularly specified, and a polymerization modifier may be added at any point during the below-described pre-processing step, at the start of polymerization, or in the middle of polymerization, and the polymerization modifier may be added in portions at plural separate occasions; however, when a metal organic carboxylate is used as the polymerization modifier, it is more preferred to add the metal organic carboxylate simultaneously with the start of the pre-processing step or the start of polymerization since this makes the addition easier. Meanwhile, when water is used as the polymerization modifier, it is effective to add water in the middle of polymerization reaction after adding the polyhalogenated aromatic compound.

### [Polymerization Stabilizer]

A polymerization stabilizer can also be used for stabilizing the polymerization reaction system and inhibiting side reactions. A polymerization stabilizer contributes to stabilization of the polymerization reaction system and suppresses undesired side reactions. One indication of side reactions is generation of thiophenol, and an addition of a polymerization stabilizer can suppress the generation of thiophenol. Specific examples of the polymerization stabilizer include compounds such as alkali metal hydroxides, alkali metal carbonates, alkaline earth metal hydroxides, and alkaline earth metal carbonates. Thereamong, alkali metal hydroxides such as sodium hydroxide, potassium hydroxide, and lithium hydroxide are preferred. The above-described metal organic carboxylates also act as polymerization stabilizers and are thus included in the polymerization stabilizer used in the present invention. Further, as described above, when an alkali metal hydrosulfide is used as the sulfidizing agent, it is particularly preferred to use an alkali metal hydroxide at the same time and, in this case, the alkali metal hydroxide that is in excess with respect to the sulfidizing agent can also serve as a polymerization stabilizer.

These polymerization stabilizers can be used singly, or in combination of two or more kinds thereof. The polymerization stabilizer(s) is/are used at a ratio of usually 0.02 to 0.2 mol, preferably 0.03 to 0.1 mol, more preferably 0.04 to 0.09 mol, with respect to 1 mol of the added alkali metal sulfide. In this preferred range, a sufficient stabilization effect can be obtained, and such a ratio of the polymerization stabilizer(s) is economically advantageous and can improve the polymer yield.

The timing of adding any of the above-described polymerization stabilizers is not particularly specified, and a polymerization stabilizer may be added at any point during the below-described pre-processing step, at the start of polymerization, or in the middle of polymerization, and the polymerization stabilizer may be added in portions at plural separate occasions; however, it is more preferred to add the polymerization stabilizer simultaneously with the start of the pre-processing step or the start of polymerization since this makes the addition easier.

Next, the pre-processing step, the polymerization reaction step, and the recovery step will be described concretely in the order mentioned.

### [Pre-processing Step]

A sulfidizing agent is usually used in the form of a hydrate, and it is preferred to heat a mixture containing an organic polar solvent and the sulfidizing agent and thereby remove excess water out of the system prior to the addition of a polyhalogenated aromatic compound. If water is removed excessively by this operation, it is preferred to add water to supplement the deficit.

As described above, as the sulfidizing agent, an alkali metal sulfide prepared from an alkali metal hydrosulfide and an alkali metal hydroxide either *in situ* in a reaction system or in a vessel different from a polymerization vessel can be used. A method for this preparation is not particularly limited, and one example thereof is a method in which the alkali metal hydrosulfide and the alkali metal hydroxide are added to an organic polar solvent desirably under an inert gas atmosphere in a temperature range of normal temperature to 150°C, preferably normal temperature to 100°C, and the resultant is heated to at least 150°C, preferably 180 to 260°C, under normal or reduced pressure to remove water by distillation. At this stage, a polymerization modifier may be added as well. Further, reaction may be carried out with an addition of toluene to facilitate the removal of water.

During polymerization reaction, the amount of water in the polymerization system is preferably 0.5 to 10.0 mol per 1 mol of the added sulfidizing agent. It is noted here that the "amount of water in the polymerization system" means an amount calculated by subtracting the amount of water removed out of the polymerization system from the amount of water added to the polymerization system. The added water may be in any form such as a liquid water, an aqueous solution, or a crystal water.

### [Polymerization Reaction Step]

A PPS resin is preferably produced by allowing the sulfidizing agent and the polyhalogenated aromatic compound to react in the organic polar solvent in a temperature range of 200 to 290°C.

For initiation of the polymerization reaction step, the sulfidizing agent and the polyhalogenated aromatic compound are added to the organic polar solvent desirably under an inert gas atmosphere in a temperature range of normal temperature to 220°C, preferably 100 to 220°C. At this stage, a polymerization modifier may be added as well. The order of adding these raw materials is not particularly limited, and these raw materials may be added simultaneously as well.

The resulting mixture is usually heated to a range of 200°C to 290°C. The heating rate is not particularly limited; however, it is usually selected to be in a range of 0.01 to 5°C/min, more preferably in a range of 0.1 to 3°C/min.

In general, the mixture is eventually heated to a temperature of 250 to 290°C and allowed to react at this temperature for a period of usually 0.25 to 50 hours, preferably 0.5 to 20 hours.

For obtaining a higher polymerization degree, it is effective to employ a method of allowing the mixture to react at a temperature of, for example, 200°C to 260°C for a certain period before the mixture reaches the final temperature, and subsequently heating the mixture to 270 to 290°C. In this case, the reaction time at 200°C to 260°C is usually selected to be in a range from 0.25 to 20 hours, preferably 0.25 to 10 hours.

For obtaining a polymer having a higher polymerization degree, it is effective to carry out the polymerization in plural stages. When carrying out the polymerization in plural stages, it is effective to move onto the next stage once the conversion rate of the polyhalogenated aromatic compound in the system at 245°C reaches 40% by mole or more, preferably 60% by mole.

### [Recovery Step]

After the completion of polymerization, a solid is recovered from the thus obtained polymerization reaction product containing a polymer and a solvent.

A PPS resin is preferably recovered under a rapid cooling condition, and one example of a preferred recovery method is a flush method. The flush method is a method in which a polymerization reaction product is flushed from a high-temperature and high-pressure state (usually at 250°C or higher and 8 kg/cm² or higher) into a normal-pressure or reduced-pressure atmosphere to recover a polymer in the form of granules simultaneously with a solvent. The term "flush" used herein means ejection of the polymerization reaction product from a nozzle. The atmosphere into which the polymerization reaction product is flushed is specifically, for example, nitrogen or water vapor under normal pressure, and the temperature thereof is usually selected to be in a range of 150°C to 250°C.

The flush method is an economically excellent recovery method since it can recover a solid simultaneously with a solvent in a relatively short recovery time. In this recovery method, an ionic compound typified by Na and an organic low-polymerization-degree substance (oligomer) tend to be incorporated into the polymer during solidification process.

It is noted here, however, that a method of recovering a PPS resin that is used in the production method of the present invention is not limited to the flush method, and any method of recovering a polymer in the form of particles by slow cooling (quench method) may be employed as long as it satisfies the requirements of the present invention. Nevertheless, in view of the economic efficiency, it is more preferred to use a PPS resin recovered by the flush method.

### [Post-treatment Step]

In the present invention, it is important that the PPS resin obtained through, for example, the above-described polymerization reaction step and recovery step be treated with an acid.

An acid used for this acid treatment in the present invention is not particularly limited as long as it does not have an effect of decomposing the PPS resin, and examples of such an acid include acetic acid, hydrochloric acid, sulfuric acid, phosphoric acid, silicic acid, carbonic acid, and propionic acid, among which acetic acid and hydrochloric acid can be used more preferably.

As water used for preparing an aqueous acid solution, distilled water or deionized water is preferred. The aqueous acid solution has a pH of preferably 1 to 7, more preferably 2 to 4. When the pH is in this preferred range, an increase in the metal content in the PPS resin can be inhibited, while an increase in the amount of a volatile component in the PPS resin can be inhibited as well.

As a method for the acid treatment, it is preferred to immerse the PPS resin in an acid or an aqueous acid solution and, if necessary, the acid treatment can be performed with stirring and heating as appropriate. The temperature of the heating is preferably 80 to 250°C, more preferably 120 to 200°C, still more preferably 150 to 200°C. When the temperature of the heating is in this preferred range, a sufficient acid treatment effect is obtained and an increase in the metal content is inhibited, while the pressure is prevented from being excessively high, which is preferred from the safety standpoint. Further, when the PPS resin is treated by immersion in an aqueous acid solution, the pH after this acid treatment is preferably lower than 8, more preferably 2 to 8. When the pH after the treatment of the PPS resin by immersion in an aqueous acid solution is in this preferred range, an increase in the metal content in the resulting PPS resin can be inhibited.

As for the duration of the acid treatment, the acid treatment is preferably performed for a duration that is sufficient for the reaction between the PPS resin and an acid to reach equilibrium and, the duration of the acid treatment is preferably 2 to 24 hours when the treatment is performed at 80°C, or preferably 0.01 to 5 hours when the treatment is performed at 200°C.

The acid treatment is preferably performed in a state where the PPS resin is sufficiently immersed in an acid or aqueous acid solution and, with regard to the ratio between the PPS resin and the acid or aqueous acid solution in the acid treatment, the acid or aqueous acid solution is used in an amount of preferably 0.5 to 500 L, more preferably 1 to 100 L, still more preferably 2.5 to 20 L, with respect to 500 g of the PPS resin. When the acid or aqueous acid solution is used in this preferred range with respect to 500 g of the PPS resin, the PPS resin can be sufficiently immersed in the acid or aqueous acid solution and thus favorably washed, so that an increase in the metal content in the PPS resin can be inhibited. Meanwhile, since the amount of the acid or aqueous acid solution relative to the PPS resin is appropriate, the production efficiency can be improved.

The above-described acid treatment is performed by, for example, a method in which a prescribed amount of the PPS resin is added to a prescribed amount of water and an acid, and the resultant is subsequently heated and stirred in a pressure vessel, or a method in which the PPS resin is continuously treated with an acid. As a method of separating an acid or aqueous acid solution and the PPS resin from a treated solution after the acid treatment, filtration using a sieve or a filter is convenient, and examples thereof include natural filtration, pressure filtration, vacuum filtration, and centrifugal filtration. The PPS resin separated from the treated solution is preferably washed with water or heated water several times so as to remove the acid and impurities remaining on the surface of the PPS resin. Examples of a washing method include a method in which filtration and washing is performed with water being poured over the PPS resin placed on a filtration device, or a separating and washing method in which the separated PPS resin is added to water prepared in advance and then filtered again. Water used for washing is preferably distilled water or deionized water. The thus acid-treated PPS resin is believed to be variable in terms of terminal structure, and it is difficult not only to represent the structure of the PPS resin obtained by the acid treatment using a general formula but also to identify the structure based on properties. Accordingly, the structure of the PPS resin can be identified only by a process (acid treatment) performed for obtaining the PPS resin.

In the present invention, it is preferred to perform a hot water treatment prior to the step of performing the acid treatment, and a method for this hot water treatment is as follows. In the present invention, water used for the hot water treatment is preferably distilled water or deionized water. The hot water treatment temperature is preferably 80 to 250°C, more preferably 120 to 200°C, still more preferably 150 to 200°C. When the hot water treatment temperature is in this preferred range, an excellent hot water treatment effect is obtained, and the amount of generated volatile gas can be reduced, while the pressure is prevented from being excessively high, which is preferred from the safety standpoint.

As for the duration of the hot water treatment, the hot water treatment is preferably performed for a duration that is sufficient for extraction of the PPS resin with hot water and, the duration of the hot water treatment is preferably 2 to 24 hours when the treatment is performed at 80°C, or preferably 0.01 to 5 hours when the treatment is performed at 200°C.

The hot water treatment is preferably performed in a state where the PPS resin is sufficiently immersed in water and, with regard to the ratio between the PPS resin and water in the hot water treatment, water is used in an amount of preferably 0.5 to 500 L, more preferably 1 to 100 L, still more preferably 2.5 to 20 L, with respect to 500 g of the PPS resin. When the amount of water is less than 0.5 L with respect to 500 g of the PPS resin, the PPS resin is not sufficiently immersed in water and thus not adequately washed, and this leads to an increase in the amount of generated volatile gas, which is not preferred. Meanwhile, when the amount of water is greater than 500 L with respect to 500 g of the PPS resin, a large excess of water relative to the PPS resin markedly deteriorates the production efficiency, which is also not preferred.

These operations of the hot water treatment are not particularly limited, and the hot water treatment is performed by, for example, a method in which a prescribed amount of the PPS resin is added to a prescribed amount of water and the resultant is subsequently heated and stirred in a pressure vessel, or a method in which the PPS resin is continuously treated with hot water. A method of separating an aqueous solution and the PPS resin from a treated solution after the hot water treatment is not particularly limited, and filtration using a sieve or a filter is conveniently employed. Examples thereof include natural filtration, pressure filtration, vacuum filtration, and centrifugal filtration. The PPS resin separated from the treated solution is preferably washed with water or heated water several times so as to remove impurities remaining on the surface of the PPS resin. A washing method is not particularly limited, and examples thereof include a method in which filtration and washing is performed with water being poured over the PPS resin placed on a filtration device, or a separating and washing method in which the separated PPS resin is added to water prepared in advance and then filtered again. Water used for washing is preferably distilled water or deionized water.

Further, the above-described acid treatment and hot water treatment are desirably performed in an inert atmosphere since decomposition of PPS terminal groups during these treatments is not preferred. Examples of the inert atmosphere include nitrogen, helium, and argon; however, from the standpoint of economic efficiency, a nitrogen atmosphere is preferred.

In the present invention, the step of washing the PPS resin with an organic solvent may also be incorporated prior to the step of performing the acid treatment or the step of performing the hot water treatment, and a method thereof is as follows. In the present invention, an organic solvent used for washing the PPS resin is not particularly limited as long as it does not have an effect of, for example, decomposing the PPS resin, and examples of the organic solvent include: nitrogen-containing polar solvents, such as N-methyl-2-pyrrolidone, dimethylformamide, dimethylacetamide, 1,3-dimethylimidazolidinone, hexamethylphosphoramide, and piperazinones; sulfoxide/sulfone-based solvents, such as dimethyl sulfoxide, dimethyl sulfone, and sulfolane; ketone-based solvents, such as acetone, methyl ethyl ketone, diethyl ketone, and acetophenone; ether-based solvents, such as dimethyl ether, dipropyl ether, dioxane, and tetrahydrofuran; halogen-based solvents, such as chloroform, methylene chloride, trichloroethylene, ethylene dichloride, perchloroethylene, monochloroethane, dichloroethane, tetrachloroethane, perchloroethane, and chlorobenzene; alcoholic/phenolic solvents, such as methanol, ethanol, propanol, butanol, pentanol, ethylene glycol, propylene glycol, phenol, cresol, polyethylene glycol, and polypropylene glycol; and aromatic hydrocarbon-based solvents, such as benzene, toluene, and xylene. Among these organic solvents, N-methyl-2-pyrrolidone, acetone, dimethylformamide, and chloroform are particularly preferably used. These organic solvents can be used singly, or in combination of two or more kinds thereof as a mixture.

As a method for the washing with an organic solvent, for example, a method of immersing the PPS resin in an organic solvent may be employed and, if necessary, the washing can be performed with stirring and heating as appropriate. The temperature at which the PPS resin is washed with an organic solvent is not particularly limited, and any temperature can be selected in a range of room temperature to about 300°C. The washing efficiency tends to be improved as the washing temperature is increased, and a sufficient effect can be usually obtained at a washing temperature of normal temperature to 150°C. It is also possible to perform the washing under pressure in a pressure vessel at a temperature of equal to or higher than the boiling point of the organic solvent. Further, the duration of the washing is also not particularly limited. Although the duration of the washing varies depending on the washing conditions, a sufficient effect can be usually obtained by performing the washing for 5 minutes or longer in the case of batch-type washing. The washing can be performed in a continuous manner as well.

The above-described acid treatment, hot water treatment, and washing with an organic solvent can be performed in combination as appropriate.

### [Curing or Heat Treatment Step]

In the present invention, it is preferred that the PPS resin obtained after the above-described post-treatment step be further subjected to a curing or heat treatment since a PPS resin having a high mechanical strength and excellent coolant resistance can thereby be obtained. The curing or heat treatment step will now be described concretely.

In the present invention, it is preferred to perform a curing or heat treatment so as to obtain a PPS resin having a high mechanical strength; however, an excessive heat treatment is not preferred since it reduces the melt flowability and increases the amount of gelled polymer in the resulting resin, causing unfilling at the time of molding. On the other hand, an overly mild heat treatment not only has a low volatile component-reducing effect and deteriorates the resin strength, but also tends to reduce the coolant resistance. According to the curing or heat treatment of the present invention, a PPS resin having an improved mechanical strength can be obtained while inhibiting the generation of a gelled polymer without impairing the melt flowability.

The curing or heat treatment can be performed in either a high-oxygen-concentration atmosphere or a low-oxygen-concentration atmosphere as long as the temperature and the duration of the curing or heat treatment are set in specified ranges; however, the curing or heat treatment is preferably performed in a low-oxygen-concentration atmosphere.

As a condition of the high-oxygen-concentration atmosphere, the oxygen concentration is preferably higher than 2% by volume, and the curing or heat treatment is desirably performed at a temperature of 160 to 270°C for a period of 0.1 to 17 hours. However, although a high volatile component reduction rate is obtained under a high-oxygen-concentration condition, a gelled polymer is likely to be generated at the same time due to rapid progress of oxidative crosslinking. Therefore, generally, the curing or heat treatment is preferably performed at a low temperature over a long time, or at a high temperature in a short time. As specific conditions for the curing or heat treatment performed at a low temperature over a long time, the curing or heat treatment is preferably performed at 160°C to 210°C for 1 hour to 17 hours, more preferably at 170°C to 200°C for 1 hour to 10 hours. When the temperature of the curing or heat treatment performed at a low temperature over a long time is in the above-described preferred range, an excellent volatile component-reducing effect is obtained and an effect of improving the mechanical strength is expected to be exerted, while even if the curing or heat treatment is prolonged in a condition where the temperature is low and the oxygen concentration is higher than 2% by volume, oxidative crosslinking hardly proceeds, so that the generation of a gelled polymer can be inhibited. As specific conditions for the curing or heat treatment performed at a high temperature in a short time, the curing or heat treatment is preferably performed at a temperature of higher than 210°C but 270°C or lower for a period of 0.1 hours or longer but shorter than 1 hour, more preferably at 220°C to 260°C for 0.2 to 0.8 hours. When the temperature of the curing or heat treatment performed at a high temperature in a short time is in the above-described preferred range, oxidative crosslinking is unlikely to rapidly proceed and the generation of a gelled polymer can thus be inhibited, while even if the curing or heat treatment is shortened at a high temperature, an excellent volatile component-reducing effect is obtained, and an effect of improving the mechanical strength is expected to be exerted.

The polyphenylene sulfide resin (A) includes a polyphenylene sulfide resin that has been heat treated under low-oxygen-concentration atmosphere. As a condition of the low-oxygen-concentration atmosphere, the oxygen concentration is 2% by volume or lower, and the curing or heat treatment is performed at a temperature of 210 to 270°C for a period of 0.2 to 50 hours. The volatile component-reducing effect tends to be reduced as the oxygen concentration decreases; therefore, generally, the curing or heat treatment is preferably performed at a high temperature over a long time, more preferably at a temperature of 220°C to 260°C for a period of 2 to 20 hours. When the duration of the curing or heat treatment is in this preferred range, volatile components are sufficiently reduced and an effect of improving the mechanical strength is thus expected to be exerted, while excellent productivity is obtained.

A heating device used for the curing or heat treatment of the present invention may be an ordinary hot air dryer, a rotary heating device, or a heating device equipped with a stirring blade; however, for a more efficient and homogeneous treatment, it is preferred to use a rotary heating device or a heating device equipped with a stirring blade, examples of which include a paddle dryer, a fluidized bed dryer, a KID dryer, a steam tube dryer, an inclined disk dryer, a hopper dryer, and a vertical stirring dryer. Thereamong, a paddle dryer, a fluidized bed dryer, and a KID dryer are preferred for achieving homogeneous and efficient heating. In order to adjust the oxygen concentration in the curing or heat treatment, a non-oxidizing inert gas such as nitrogen, argon, helium, or water vapor may be incorporated into an oxidizing gas such as oxygen, air, or ozone. As long as the curing or heat treatment can be performed inside a heating device, the oxidizing gas and the inert gas may be introduced from any position of an upper part, a lower part, or a side part of the heating device with no particular limitation; however, as a simpler method, for example, the gases are introduced from an upper part of the heating device. Further, the oxidizing gas and the inert gas may be mixed before being introduced into the heating device, or may be separately introduced into the heating device from different positions of the heating device.

The structure of the PPS resin is believed to be modified through the curing or heat treatment step and, since the PPS resin obtained through the curing or heat treatment has a complex and diverse structure, there is a circumstance that makes it impractical to specify the structure of the PPS resin. By going through the curing or heat treatment step, volatile components and water contained in the PPS resin can be removed, and the PPS resin can be provided with not only excellent mechanical strength and excellent weld strength, but also excellent coolant resistance.

The PPS resin obtained through the above-described polymerization reaction step and recovery step as well as preferably the post-treatment step and the curing or heat treatment step has a melt flow rate (hereinafter, may be abbreviated as "MFR") of preferably 1,000 g/10 min or lower, more preferably 700 g/10 min or lower, still more preferably 500 g/10 min or lower. When the MFR is in this preferred range, the PPS resin has a sufficiently high polymerization degree and excellent mechanical strength. As a lower limit, the MFR is preferably in a range of higher than 80 g/10 min from the standpoint of moldability, and it is more preferably 100 g/10 min or higher. It is noted here that the MFR is a value measured in accordance with ASTM-D1238-70 at a measurement temperature of 315.5°C with a load of 5,000 g.

The PPS resin used in the present invention has a number-average molecular weight of 7,000 to 14,000, preferably 8,000 to 14,000. By controlling the number-average molecular weight to be 7,000 or more, not only a high mechanical strength and a high coolant resistance can be obtained, but also the generation of mold deposit can be inhibited. By controlling the number-average molecular weight to be 14,000 or less, an appropriate flowability can be obtained along with a high coolant resistance.

Particularly, a PPS resin having the below-described characteristic feature (1) can not only reduce the amount of a volatile component generated during melting of a PPS resin composition, but also provide a high coolant resistance. Such a PPS resin is also preferred since it can inhibit the generation of mold deposit. Further, a PPS resin having the below-described characteristic feature (2) can also inhibit the generation of mold deposit and is preferred from the standpoint of obtaining a high weld strength and a high coolant resistance.
(1) The PPS resin gives a residue amount of 2.0 to 5.0% by weight when dissolved in a 20-fold amount by weight of 1-chloronaphthalene at 250°C for 5 minutes and subsequently subjected to heat pressure filtration through a PTFE membrane filter having a pore size of 1 µm.

It is desired that the residue amount of the PPS resin be preferably 4.8% by weight or less, more preferably 4.5% by weight or less. It is preferred to control the residue amount to be in this preferred range since an appropriate flowability can thereby be obtained. A lower limit of the residue amount is not less than 2.0% by weight, preferably not less than 2.2% by weight, more preferably not less than 2.5% by weight. By controlling the residue amount to be 2.0% by weight or more, crosslinking based on a thermal oxidation treatment is allowed to proceed, so that the amount of a volatile component generated during melting can be reduced and a high coolant resistance can be obtained. A PPS resin having such properties can be obtained by appropriately applying a thermal oxidation treatment after the above-described post-treatment step.

The above-described residue amount is measured for a sample, which is prepared by pressing the PPS resin into a film of about 80 µm in thickness, using a high-temperature filtration device and an SUS test tube equipped with a pneumatic cap and a collection funnel. Specifically, a membrane filter having a pore size of 1 µm is set in the SUS test tube and, subsequently, the PPS resin pressed into a film of about 80 µm in thickness and 20-fold amount by weight of 1-chloronaphthalene are weighed and hermetically sealed in the SUS test tube. This SUS test tube is set in a 250°C high-temperature filtration device and shaken with heating for 5 minutes. Thereafter, an air-containing syringe is connected to the pneumatic cap, and the piston of the syringe is then pushed to perform hot-filtration pneumatically. As a specific method of quantifying the residue amount, the residue amount is determined from the difference in weight between the membrane filter prior to the filtration and the membrane filter after the filtration and subsequent 1-hour vacuum-drying at 150°C.

(2) When the PPS resin is heat-melted under vacuum at 320°C for 2 hours, the amount of generated volatile gas is 0.35% by weight or less.

It is desired that the gas generation amount of the PPS resin be preferably 0.30% by weight or less, more preferably 0.28% by weight or less. A PPS resin having this property can be obtained by appropriately applying the above-described washing and thermal oxidation treatment. It is preferred to control the gas generation amount to be 0.35% by weight or less since the amount of a volatile component is thereby reduced, and the weld strength and the coolant resistance are improved. With regard to a lower limit of the gas generation amount after the thermal oxidation treatment, the gas generation amount is preferably small, and a preferred lower limit is 0.01% by weight. By controlling the gas generation amount to be 0.01% by weight or more, the duration of the thermal oxidation treatment can be prevented from being excessively long and causing an economic disadvantage. In addition, an increase in the duration of the thermal oxidation treatment makes the generation of a gelled polymer more likely to occur, and this leads to a molding defect; therefore, the above-described lower limit is also preferred in terms of preventing such an increase in the duration of the thermal oxidation treatment.

The above-described gas generation amount means the amount of an adhesive component resulting from cooling and liquefaction or solidification of a gas that is volatilized when the PPS resin is heat-melted under vacuum, and it is measured by heating a glass ampoule, in which the PPS resin is vacuum-sealed, in a tubular furnace. This glass ampoule is shaped such that the body portion has dimensions of 100 mm × 25 mm, the neck portion has dimensions of 255 mm × 12 mm, and the wall thickness is 1 mm. In a specific measurement method, only the body portion of the glass ampoule in which the PPS resin is vacuum-sealed is inserted into the tubular furnace at 320°C and heated for 2 hours, and a volatile gas is cooled and adheres to the neck portion of the ampoule that is not heated by the tubular furnace. This neck portion is cut out and weighed, and the adhered gas is subsequently dissolved in chloroform and removed. Thereafter, the neck portion is dried and then weighed again. The gas generation amount is determined from the difference in the weight of the ampoule neck portion before and after the gas removal.

For example, by using a PPS resin obtained by the above-described production method, a resin composition which has excellent coolant resistance and inhibits the generation of mold deposit can be obtained and, in the present invention, such a heat-treated PPS resin is preferably used.

The PPS resin contained in the PPS resin composition of the present invention is required to be a PPS resin (A) that has a number-average molecular weight of 7,000 to 14,000 and gives a residue amount of 2.0 to 5.0% by weight when subjected to heat pressure filtration by the above-described method. The PPS resin (A) may be composed of only a single kind of PPS resin having the above-described properties, or a mixture of plural kinds of PPS resins having different properties. When plural kinds of PPS resins are mixed, it is only necessary that the PPS resins have the above-described properties in a mixed state, and the mixture may include a PPS resin that does not individually have the above-described properties.

The PPS resin composition of the present invention contains glass fibers (B).

The content of the glass fibers (B) in the PPS resin composition of the present invention is 30 to 110 parts by weight with respect to 100 parts by weight of the PPS resin (A). This is required for obtaining excellent mechanical strength, weld strength, and dimensional accuracy.

When the content of the glass fibers (B) is less than 30 parts by weight with respect to 100 parts by weight of the PPS resin (A), the composition cannot be provided with an appropriate strength. When the content of the glass fibers (B) is more than 110 parts by weight, since the melt flowability of the composition is reduced, appropriate molding processability and mechanical strength cannot be obtained.

Examples of the glass fibers (B) include glass fibers, modified cross-section glass fibers, cut glass fibers, and flat glass fibers, and these glass fibers can be used in combination of two or more kinds thereof. Thereamong, glass fibers are preferred. Further, in terms of obtaining superior mechanical strength, it is preferred to use these glass fibers after pretreating them with a coupling agent such as an isocyanate compound, an organosilane compound, an organotitanate compound, an organoborane compound, or an epoxy compound, and it is particularly preferred to treat the glass fibers with an epoxy group-containing sizing agent.

The PPS resin composition of the present invention also contains (C) a silane compound having a functional group selected from an amino group and an isocyanate group (hereinafter, may be referred to as "silane compound (C)").

The content of the silane compound (C) in the PPS resin composition of the present invention is 0.1 to 3 parts by weight with respect to 100 parts by weight of the PPS resin (A). By controlling the content of the silane compound (C) to be in this range, both excellent flowability and excellent coolant resistance can be obtained.

When the content of the silane compound (C) is less than 0.1 parts by weight with respect to 100 parts by weight of the PPS resin (A), the composition cannot be provided with appropriate strength and coolant resistance. When the content of the silane compound (C) is more than 3 parts by weight, since the melt flowability of the composition is reduced, an appropriate molding processability cannot be obtained and the amount of mold deposit is increased.

Specific examples of the silane compound (C) include: isocyanate group-containing alkoxysilane compounds, such as *γ*-isocyanate propyltriethoxysilane, *γ-*isocyanate propyltrimethoxysilane, *γ*-isocyanate propylmethyldimethoxysilane, *γ-*isocyanate propylmethyldiethoxysilane, *γ*-isocyanate propylethyldimethoxysilane, *γ-*isocyanate propylethyldiethoxysilane, and *γ*-isocyanate propyltrichlorosilane; and amino group-containing alkoxysilane compounds, such as *γ*-(2-aminoethyl)aminopropylmethyldimethoxysilane, *γ*-(2-aminoethyl)aminopropyltrimethoxysilane, *γ*-aminopropyltrimethoxysilane, and *γ-*aminopropyltriethoxysilane. Thereamong, *γ*-aminopropyltriethoxysilane and *γ-*isocyanate propyltriethoxysilane are preferred for obtaining excellent coolant resistance, and *γ*-isocyanate propyltriethoxysilane is particularly preferred for inhibiting the generation of mold deposit in addition to obtaining excellent coolant resistance.

In the PPS resin composition of the present invention, for the purpose of improving the thermal shock resistance, an elastomer may be added within a range that does not impair the effects of the present invention. Examples of the elastomer include (co)polymers obtained by polymerizing one or more *α*-olefins such as ethylene, propylene, 1-butene, 1-pentene, 1-octene, 4-methyl-1-pentene, and isobutylene, for example, ethylene/propylene copolymers ("/" represents copolymerization, the same applies hereinafter), ethylene/1-butene copolymers, ethylene/1-hexene copolymers, and ethylene/1-octene copolymers. The elastomer can be obtained by introducing an epoxy group-containing monomer component (functional group-containing component) into a copolymer composed of an *α*-olefin and an *α*,*β*-unsaturated acid or alkyl ester thereof such as acrylic acid, methyl acrylate, ethyl acrylate, butyl acrylate, methacrylic acid, methyl methacrylate, ethyl methacrylate, or butyl methacrylate, examples of which copolymer include ethylene/methyl acrylate copolymers, ethylene/ethyl acrylate copolymers, ethylene/butyl acrylate copolymers, ethylene/methyl methacrylate copolymers, ethylene/ethyl methacrylate copolymers, and ethylene/butyl methacrylate copolymers. Examples of the functional group-containing component include epoxy group-containing monomers, such as glycidyl acrylate, glycidyl methacrylate, glycidyl ethacrylate, glycidyl itaconate, and glycidyl citraconate. A method of introducing the functional group-containing component is not particularly limited and, for example, a method of copolymerizing the functional group-containing component at the time of (co)polymerizing an olefin-based (co)polymer, or a method of grafting the functional group-containing component into an olefin-based (co)polymer using a radical initiator may be employed. It is appropriate that the amount of the functional group-containing component to be introduced be in a range of 0.001 to 40% by mole, preferably 0.01 to 35% by mole, with respect to all of the monomers constituting the resulting modified olefin-based (co)polymer. Specific examples of a glycidyl group-containing olefin-based copolymer that is particularly useful and obtained by introducing an epoxy group-containing monomer component into an olefin polymer include ethylene/propylene-g-glycidyl methacrylate copolymers ("g" represents graft, the same applies hereinafter), ethylene/1-butene-g-glycidyl methacrylate copolymers, ethylene/glycidyl acrylate copolymers, ethylene/glycidyl methacrylate copolymers, ethylene/methyl acrylate/glycidyl methacrylate copolymers, and ethylene/methyl methacrylate/glycidyl methacrylate copolymers, and an epoxy group-containing olefin-based copolymer that contains an *α*-olefin such as ethylene or propylene, a glycidyl ester of an *α*,*β*-unsaturated acid, and other monomer(s) as indispensable components can also be used preferably.

Preferred examples include ethylene/glycidyl methacrylate copolymers, ethylene/methyl acrylate/glycidyl methacrylate copolymers, and ethylene/methyl methacrylate/glycidyl methacrylate copolymers, and particularly preferred examples include ethylene/methyl acrylate/glycidyl methacrylate copolymers.

The amount of the above-described elastomer to be added is preferably 1 to 20 parts by weight with respect to 100 parts by weight of the PPS resin (A), and it is more preferably 2 to 15 parts by weight from the standpoint of obtaining excellent mechanical strength, excellent thermal shock resistance, and excellent moldability at the same time.

Further, the PPS resin composition of the present invention may be blended with other resin within a range that does not impair the effects of the present invention. This resin that may be blended is not particularly limited, and specific examples thereof include: polyamides, such as nylon 6, nylon 66, nylon 610, nylon 11, nylon 12, and aromatic nylons; polyester resins, such as polyethylene terephthalate, polybutylene terephthalate, polycyclohexyl dimethylene terephthalate, and polynaphthalene terephthalate; polyamide imides; polyacetals; polyimides; polyether imides; polyether sulfones; modified polyphenylene ether resins; polysulfone resins; polyarylsulfone resins; polyketone resins; polyarylate resins; liquid crystal polymers; polyether ketone resins; poly(thioether ketone) resins; polyether ether ketone resins; and polyethylene tetrafluoride resins.

In the PPS resin composition of the present invention, other components may be added within a range that does not impair the effects of the present invention, and examples thereof include ordinary additives, such as antioxidants; heat stabilizers (e.g., hindered phenol-based, hydroquinone-based, phosphorus-based, phosphite-based, amine-based, and sulfur-based heat stabilizers, and substitutes thereof); anti-weathering agents (e.g., resorcinol-based, salicylate-based, benzotriazole-based, benzophenone-based, and hindered amine-based anti-weathering agents); mold release agents and lubricants (e.g., montanic acid and its metal salts, esters, and half-esters, stearyl alcohol, stearamide, stearate, bis-urea, and polyethylene wax); pigments (e.g., cadmium sulfide, phthalocyanine, and carbon black for coloring); dyes (e.g., nigrosine); crystal nucleating agents (e.g., inorganic crystal nucleating agents, such as talc, silica, kaolin and clay, and organic crystal nucleating agents); plasticizers (e.g., octyl *p*-oxybenzoate and N-butylbenzene sulfonamide); antistatic agents (e.g., alkyl sulfate-type anionic antistatic agents, quaternary ammonium salt-type cationic antistatic agents, nonionic antistatic agents such as polyoxyethylene sorbitan monostearate, and betaine-based amphoteric antistatic agents); flame retardants (e.g., red phosphorus, phosphoric acid esters, melamine cyanurate, hydroxides such as magnesium hydroxide and aluminum hydroxide, ammonium polyphosphates, brominated polystyrenes, brominated polyphenylene ethers, brominated polycarbonates, brominated epoxy resins, and combinations of any of these bromine-based flame retardants and antimony trioxide); heat stabilizers; lubricants, such as calcium stearate, aluminum stearate, and lithium stearate; strength improvers, such as bisphenol epoxy resins (e.g., bisphenol A-type epoxy resins), novolac phenol-type epoxy resins, and cresol novolac-type epoxy resins; anti-UV agents; colorants; and foaming agents. Thereamong, a polyethylene used as a mold release agent is preferred from the standpoint of coolant resistance, and an amide compound is particularly preferred from the standpoint of coolant resistance as well as inhibition of the generation of mold deposit. Further, the type of a crystal nucleating agent is not particularly limited, and examples thereof include inorganic crystal nucleating agents and organic crystal nucleating agents, among which an organic crystal nucleating agent is particularly preferred from the standpoint of coolant resistance and weld strength. Examples of an organic crystal nucleating agent used in the present invention include: sorbitol compounds and metal salts thereof; metal phosphates; rosin compounds; amide compounds, such as oleic acid amide, acrylic acid amide, stearic acid amide, decanedicarboxylic acid dibenzoyl hydrazide, hexanedicarboxylic acid dibenzoyl hydrazide, 1,4-cyclohexanedicarboxylic acid dicyclohexylamide, trimesic acid amide, anilide compounds, 2,6-naphthalenedicarboxylic acid dicyclohexylamide, N,N-dibenzoyl-1,4-diaminocyclohexane, *N*,*N*'-dicyclohexane carbonyl-1,5-diaminonaphthalene, and octanedicarboxylic acid dibenzoyl hydrazide; and organic compounds and polymer compounds, such as ethylenediamine-stearic acid-sebacic acid polycondensates, montanic acid waxes, aliphatic carboxylic acid metal salts, aromatic carboxylic acid metal salts, aromatic phosphonic acid and metal salts thereof, aromatic phosphoric acid metal salts, aromatic sulfonic acid metal salts, metal salts of *β*-diketones, carboxyl group metal salts, organophosphorus compounds, polyethylenes, polypropylenes, polybutadienes, polystyrenes, AS resins, ABS resins, poly(acrylic acid), poly(acrylate), poly(methacrylic acid), poly(methacrylate), polyamide 6, polyamide 46, polyamide 66, polyamide 6T, polyamide 9T, polyamide 10T, polyether ether ketones, and polyether ketones. Thereamong, the organic crystal nucleating agent is preferably a carbonyl group-containing polymer compound, more preferably a polyether ether ketone. The amount of the organic crystal nucleating agent to be added is preferably 0.06 to 0.19 parts by weight with respect to 100 parts by weight of the PPS resin (A)

In the PPS resin composition of the present invention, an inorganic filler other than the glass fibers (B) may further be added within a range that does not impair the effects of the present invention. The inorganic filler that may be added is not particularly limited, and specific examples thereof in a fibrous form include stainless steel fibers, aluminum fibers, brass fibers, rock wool, PAN-based and pitch-based carbon fibers, carbon nanotubes, carbon nanofibers, calcium carbonate whiskers, wollastonite whiskers, potassium titanate whiskers, barium titanate whiskers, aluminum borate whiskers, silicon nitride whiskers, aramid fibers, alumina fibers, silicon carbide fibers, asbestos fibers, gypsum fibers, ceramic fibers, zirconia fibers, silica fibers, titanium oxide fibers, and silicon carbide fibers. These fibrous fillers can be used in combination of two or more kinds thereof. Further, in terms of obtaining superior mechanical strength, it is preferred to use these fibrous fillers after pretreating them with a coupling agent such as an isocyanate compound, an organosilane compound, an organotitanate compound, an organoborane compound, or an epoxy compound.

Specific examples of the inorganic filler in a non-fibrous form include: silicates, such as talc, wollastonite, zeolite, sericite, mica, kaolin, clay, pyrophyllite, bentonite, asbestos, alumina silicate, and hydrotalcite; silicon oxide; magnesium oxide; aluminum oxide (alumina); silica (crushed or spherical form); quartz; glass beads; glass flakes; crushed/amorphous glass; glass microballoons; molybdenum disulfide; oxides, such as aluminum oxide (crushed form), translucent alumina (fibrous, plate-like, scaly, granular, amorphous, or crushed form), titanium oxide (crushed form), zinc oxide (fibrous, plate-like, scaly, granular, amorphous, or crushed form) ; carbonates, such as calcium carbonate, magnesium carbonate, and zinc carbonate; sulfates, such as calcium sulfate and barium sulfate; hydroxides, such as calcium hydroxide, magnesium hydroxide, and aluminum hydroxide; silicon carbide; carbon black; silica; graphite; aluminum nitride; translucent aluminum nitride (fibrous, plate-like, scaly, granular, amorphous, or crushed form); calcium polyphosphate; metal powder; metal flakes; metal ribbons; and metal oxides. Specific examples of the metal species of the metal powder, the metal flakes, and the metal ribbons include silver, nickel, copper, zinc, aluminum, stainless steel, iron, brass, chromium, and tin. Examples of the inorganic filler also include carbon powder, carbon flakes, scaly carbon, fullerene, and graphene, and these fillers may be hollow and can be used in combination of two or more kinds thereof. Further, these inorganic fillers may be used after being pretreated with a coupling agent such as an isocyanate compound, an organosilane compound, an organotitanate compound, an organoborane compound, or an epoxy compound. Among the above-described inorganic fillers, calcium carbonate, carbon powder, and graphite are preferred.

A method of preparing the PPS resin composition of the present invention is not particularly limited, and representative examples thereof include a method in which raw materials are supplied to a generally known melt-mixing machine such as a single-screw or twin-screw extruder, a Banbury mixer, a kneader, or a mixing roll, and kneaded at a temperature of 280 to 380°C. The order of mixing raw materials is also not particularly limited, and any of the following methods may be employed: a method of blending all of the raw materials and subsequently melt-kneading the resultant by the above-described method; a method of blending some of the raw materials, subsequently melt-kneading the resultant by the above-described method, further adding the remaining raw materials, and then melt-kneading the resultant; and a method of blending some of the raw materials and subsequently, while melt-kneading the resultant using a single-screw or twin-screw extruder, admixing the remaining raw materials using a side feeder. With regard to a small amount of an additive component, needless to say, it can be added after other components are kneaded and pelletized by the above-described method but before molding, and the resultant can be subsequently molded.

The PPS resin composition of the present invention obtained in the above-described manner can be molded by various molding techniques such as injection molding, extrusion molding, blow molding, and transfer molding, and is particularly suitable for injection molding applications. The PPS resin composition of the present invention is suitable for automotive cooling parts, particularly a small-sized and complex-shaped automotive cooling part that includes a combination of plural components. The "complex-shaped automotive cooling part" may include a combination of a housing and at least two pipes, and the housing may have any of a quadrangular shape, a triangular shape, an elliptical shape, or a composite of these shapes. Ribs, bosses, and flanges may be arranged on the housing, or the housing may have a substantially flat shape. The pipes connected to the housing may be straight or bent, and the cross-sections of these pipes may have any of a circular shape, an elliptical shape, and a quadrangular shape. Further, ribs, bosses, and flanges may be arranged on the respective pipes. These at least two pipes may have the same shape, or a combination of different shapes. As for a method of connecting the pipes, for example, each pipe may be bolted or welded by hot plate welding, or may be molded as a part of the housing by injection molding. Further, as for the place of connecting the pipes, the pipes may be connected to the wall surface or the bottom surface. A lid of the housing may be made of a resin or a metal, and the lid may be bolted or welded by hot plate welding.

Alternatively, the "complex-shaped automotive cooling part" may include a combination of a housing, a valve, and at least three pipes. The housing may have any of a quadrangular shape, a triangular shape, an elliptical shape, or a composite of these shapes, and ribs, bosses, and flanges may be arranged on the housing. The valve enclosed in the housing may have any of a spherical shape, a cylindrical shape, or a composite of these shapes, and an open hole is made on the valve. The valve may be provided singly, or two or more thereof may be provided. The pipes connected to the housing may be straight or bent, and the cross-sections of these pipes may have any of a circular shape, an elliptical shape, and a quadrangular shape. Further, ribs, bosses, and flanges may be arranged on the respective pipes. These at least three pipes may have the same shape, or a combination of different shapes. As for a method of connecting the pipes, for example, each pipe may be bolted or welded by hot plate welding, or may be molded as a part of the housing by injection molding. Further, as a method of enclosing the valve, after separating the housing into a case and a lid, the valve may be placed in the case and the lid may be subsequently bolted to close the housing, or the lid may be welded by hot plate welding to close the housing.

A liquid circulated inside the housing may be water, or an coolant containing an alcohol, a glycol, or glycerol, and the type and the concentration thereof is not particularly limited. The liquid may have a high temperature or a low temperature, and may be repeatedly circulated.

For opening and closing of the valve enclosed in the housing, an engine driving force or a motor driving force may be utilized.

The PPS resin composition of the present invention has a melt crystallization peak temperature of preferably 230°C or higher, more preferably 235°C or higher, as determined using a differential scanning calorimeter. When the melt crystallization peak temperature is 230°C or higher, not only the cooling time in injection molding is shortened and the productivity is thus improved, but also the coolant resistance is improved, which is preferred. In order to obtain a PPS resin composition having this property, it is considered incorporating, for example, an organic crystal nucleating agent. It is noted here that the melt crystallization peak temperature in the present invention is a value that is determined by collecting about 10 mg of a sample from pellets of the PPS resin composition, heating the sample at a heating rate of 20°C/min, maintaining the sample at 340°C for 5 minutes and then cooling the sample at a rate of 20°C/min, using a differential scanning calorimeter DSC-7 manufactured by PerkinElmer Co., Ltd.

The PPS resin composition of the present invention preferably has a tensile strength of 190 MPa or higher as measured for an ISO test piece prepared by injection-molding the PPS resin composition. When the tensile strength of the ISO test piece is in this preferred range, a molded article of the PPS resin composition can satisfy a sufficient strength. In this case, the tensile strength is evaluated as measured in accordance with ISO 527-1 and 527-2 at a tensile speed of 5 mm/min and an atmospheric temperature of 23°C. The ISO test piece is immersed in a 150°C coolant for 500 hours, and the tensile strength thereof is subsequently measured in accordance with ISO 527-1 and 527-2 at a tensile speed of 5 mm/min and an atmospheric temperature of 23°C. The tensile strength retention rate after this coolant treatment is preferably 80% or higher. When the tensile strength retention rate after the coolant treatment is in this preferred range, since the mechanical strength is hardly reduced by the coolant treatment, and the coolant treatment does not induce cracking of a molded article. It is particularly preferred that the tensile strength be 190 MPa or higher and the tensile strength retention rate after the coolant treatment be 80% or higher, since such a PPS resin composition has a combination of superior mechanical strength, superior hot water resistance, and superior coolant resistance. In order to obtain a PPS resin composition having these properties, it is considered blending, for example, a PPS resin having a number-average molecular weight of 7,000 to 14,000, which has been subjected to a thermal oxidation treatment, with glass fibers.

The type of the coolant is not particularly limited, and the coolant may be Volkswagen genuine long-life coolant (LLC) (G13), TOYOTA Motor genuine S-LLC, General Motors genuine LLC (DEX-COOL), or Hyundai Motor Company genuine LLC (A-110).

As described above, the PPS resin composition of the present invention not only has excellent mechanical strength and excellent coolant resistance, but also can inhibit the generation of mold deposit. That is, the PPS resin composition of the present invention not only has a high mechanical strength and a high coolant resistance but also inhibits the generation of mold deposit; therefore, it is useful for automotive cooling parts, particularly small-sized and complex-shaped automotive cooling parts that include a combination of plural components.

Examples of other applications to which the PPS resin composition of the present invention can be applied include: electric and electronic components typified by sensors, LED lamps, consumer connectors, sockets, resistors, relay cases, switches, coil bobbins, capacitors, variable capacitor cases, oscillators, various terminal blocks, transformers, plugs, printed circuit boards, tuners, speakers, microphones, headphones, small motors, magnetic head bases, semiconductors, liquid crystals, FDD carriages, FDD chassis, motor brush holders, parabolic antennas, and computer-related components; and household and office electric appliance components typified by VTR components, TV set components, irons, hair dryers, rice cooker components, microwave oven components, acoustic components, audio equipment components such as audio laser disks (registered trademark)/compact disks, lighting components, refrigerator components, air conditioner components, typewriter components, and word processor components. Examples of other applications of the PPS resin composition of the present invention also include: machine-related components typified by office computer-related components, telephone-related components, fax machine-related components, copying machine-related components, washing jigs, motor components, lighters, and typewriters; optical equipment and precision machine-related parts typified by microscopes, binoculars, cameras, and watches; plumbing-related components, such as faucet packings, combination faucets, pump components, pipe joints, water flow control valves, relief valves, water temperature sensors, water flow sensors, and water meter housings; and automobile and vehicle-related components, such valve alternator terminals, alternator connectors, IC regulators, potentiometer bases for light dimmers, various valves including emission gas valves, various pipes for fuel, exhaust and air intake systems, air intake nozzle snorkels, intake manifolds, fuel pumps, engine coolant joints, carburetor main bodies, carburetor spacers, emission sensors, coolant sensors, oil temperature sensors, throttle position sensors, crankshaft position sensors, air flow meters, brake pad wear sensors, thermostat bases for air conditioners, hot air flow control valves, brush holders for radiator motors, water pump impellers, turbine vanes, wiper motor-related components, distributors, starter switches, starter relays, transmission wire harnesses, windshield washer fluid nozzles, air conditioner panel switch plates, fuel solenoid valve coils, fuse connectors, horn terminals, electric component insulators, step motor rotors, lamp sockets, lamp reflectors, lamp housings, brake pistons, solenoid bobbins, engine oil filters, ignition cases, vehicle speed sensors, and cable liners.

### Examples

The present invention will now be described more concretely by way of Examples; however, the present invention is not limited to the below-described Examples.

### [PPS Resin Measurement Methods]

### (1) Residue Amount

A PTFE membrane filter having a pore size of 1 µm, which had been weighed in advance, was set in an SUS test tube (manufactured by Senshu Scientific Co., Ltd.) equipped with a pneumatic cap and a collection funnel, and 100 mg of a PPS resin pressed into a film of about 80 µm in thickness and 2 g of 1-chloronaphthalene were weighed and hermetically sealed in the SUS test tube. This SUS test tube was inserted into a high-temperature filtration device (SSC-9300, manufactured by Senshu Scientific Co., Ltd.) and shaken with heating at 250°C for 5 minutes to dissolve the PPS resin into 1-chloronaphthalene. After connecting an air-containing 20-mL syringe to the pneumatic cap, the piston of the syringe was pushed to filter the resulting solution through the membrane filter. The membrane filter was taken out, dried in vacuum at 150°C for 1 hour, and then weighed. The difference in the weight of the membrane filter before and after the filtration with respect to the weight of the membrane filter before the filtration was determined as the residue amount (% by weight).

### (2) Gas Generation Amount

A PPS resin was weighed in 3 g and vacuum-sealed in a glass ampoule having a 100 mm × 25 mm body portion, a 255 mm × 12 mm neck portion, and a wall thickness of 1 mm. Only the body portion of this glass ampoule was inserted into a ceramic electric tubular furnace (ARF-30K, manufactured by Asahi Rika Co., Ltd.) and heated at 320°C for 2 hours. The ampoule was taken out and its neck portion, which was not heated by the tubular furnace and to which volatile gas adhered, was subsequently cut out with a file and weighed. Thereafter, the adhered gas was dissolved in 5 g of chloroform and removed, after which the neck portion was dried in a 60°C glass dryer for 1 hour and then weighed again. The difference in the weight of the ampoule neck portion before and after the gas removal was determined as the gas generation amount (% by weight).

### (3) Melt Flow Rate (MFR)

The melt flow rate (MFR) was measured in accordance with ASTM-D1238-70 at a measurement temperature of 315.5°C with a load of 5,000 g.

### (4) Number-Average Molecular Weight

The number-average molecular weight was determined in accordance with the method described in Japanese Journal of Polymer Science and Technology Vol. 44 (1987) February issue p.139 to 141, using a gel permeation chromatography apparatus manufactured by Waters Corporation (GPC-244) with SHODEX K-806M (manufactured by Showa Denko K.K.) as a column, 1-chloronaphthalene as a solvent, a hydrogen flame ionization detector as a detector, and six kinds of monodisperse polystyrenes for correction.

### [Reference Example 1] Polymerization of PPS (PPS-1)

To an autoclave equipped with a stirrer and a valve at the bottom, 8,267.4 g (70.0 mol) of 47.5% sodium hydrosulfide, 2,925.0 g (70.2 mol) of 96% sodium hydroxide, 13,860.0 g (140.0 mol) of N-methyl-2-pyrrolidone (NMP), 1,894.2 g (23.1 mol) of sodium acetate, and 10,500.0 g of ion exchanged water were added. These materials were slowly heated to 240°C over a period of about 3 hours at normal pressure in a nitrogen stream and, after 14,772.1 g of water and 280.0 g of NMP were distilled off, the reaction vessel was cooled to 160°C. The amount of water remaining in the system per 1 mol of the added alkali metal sulfide was 1.08 mol, including the amount of water consumed by hydrolysis of NMP. In addition, the amount of scattered hydrogen sulfide was 0.023 mol per 1 mol of the added alkali metal sulfide.

Next, 10,646.7 g (72.4 mol) ofp-dichlorobenzene (*p*-DCB) and 6,444.9 g (65.1 mol) of NMP were added, and the reaction vessel was hermetically sealed under nitrogen gas, heated from 200°C to 270°C at a rate of 0.6°C/min with stirring at 240 rpm, and then maintained at 270°C for 70 minutes. The discharge valve on the bottom of the autoclave was opened, and the content was flushed under nitrogen pressure into a vessel equipped with a stirrer over a period of 15 minutes, and stirred at 250°C for a while to remove most of NMP.

The resulting solid and 53 L of ion exchanged water were put into an autoclave equipped with a stirrer, and the solid was washed at 70°C for 30 minutes, followed by suction-filtration through a glass filter having a pore size of 10 to 16 µm. Subsequently, 60 L of ion exchanged water heated to 70°C was poured onto the glass filter having a pore size of 10 to 16 µm and suction-filtered to obtain a PPS resin cake in an amount of 18,000 g (containing 7,550 g of a PPS resin).

The thus obtained 18,000 g of PPS resin cake, 40 L of ion exchanged water, and 43 g of acetic acid were added to an autoclave equipped with a stirrer, and this autoclave was purged with nitrogen, heated to 192°C, and then maintained for 30 minutes to perform an acid treatment. The pH during the acid treatment was 7. After cooling the autoclave, the content was filtered through a glass filter having a pore size of 10 to 16 µm. Subsequently, 60 L of ion exchanged water heated to 70°C was poured onto the glass filter and suction-filtered to obtain a cake. The thus obtained cake was dried in a nitrogen stream at 120°C for 4 hours to obtain a powder of acid-treated PPS resin. Thereafter, this PPS resin powder was put into a 100-L heating apparatus equipped with a stirrer, and subjected to a 2-hour thermal oxidation treatment at a temperature of 220°C and an oxygen concentration of 2%, whereby a cross-linked PPS-1 was obtained. The thus obtained polymer had a number-average molecular weight of 8,500, a gas generation amount of 0.16% by weight, a residue amount of 2.1% by weight, and an MFR of 420 g/10 min.

### [Reference Example 2] Polymerization of PPS (PPS-2)

To a 70-L autoclave equipped with a stirrer and a bottom plug valve, 8.27 kg (70.00 mol) of 47.5% sodium hydrosulfide, 2.91 kg (69.80 mol) of 96% sodium hydroxide, 11.45 kg (115.50 mol) of N-methyl-2-pyrrolidone (NMP), and 10.5 kg of ion exchanged water were added. These materials were slowly heated to 245°C over a period of about 3 hours at normal pressure in a nitrogen stream and, after 14.78 kg of water and 0.28 kg of NMP were distilled off, the reaction vessel was cooled to 200°C. The amount of water remaining in the system per 1 mol of the added alkali metal sulfide was 1.06 mol, including the amount of water consumed by hydrolysis of NMP. In addition, the amount of scattered hydrogen sulfide was 0.02 mol per 1 mol of the added alkali metal sulfide.

Subsequently, the system was cooled to 200°C, and 10.48 kg (71.27 mol) of p-dichlorobenzene and 9.37 kg (94.50 mol) of NMP were added, after which the reaction vessel was hermetically sealed under nitrogen gas and then heated from 200°C to 270°C at a rate of 0.6°C/min with stirring at 240 rpm. After the materials were allowed to react at 270°C for 100 minutes, the bottom plug valve of the autoclave was opened, and the content was flushed under nitrogen pressure into a vessel equipped with a stirrer over a period of 15 minutes, and stirred at 250°C for a while to remove most of NMP.

The resulting solid and 76 L of ion exchanged water were put into an autoclave equipped with a stirrer, and the solid was washed at 70°C for 30 minutes, followed by suction-filtration through a glass filter. Subsequently, 76 L of ion exchanged water heated to 70°C was poured onto the glass filter and suction-filtered to obtain a cake.

The thus obtained cake and 90 L of ion exchanged water were added to an autoclave equipped with a stirrer, and acetic acid was further added to adjust the pH to be 7. The autoclave was purged with nitrogen, heated to 192°C, and then maintained for 30 minutes. Subsequently, the autoclave was cooled, and the content was taken out.

The thus recovered content was suction-filtered through a glass filter, and 76 L of 70°C ion exchanged water was then poured thereon and suction-filtered to obtain a cake. The thus obtained cake was dried in a nitrogen stream at 120°C to obtain a dry PPS. This dry PPS was heat-treated at 200°C in an oxygen stream until an MFR value of 150 g/10 min was achieved, whereby a cross-linked PPS-2 was obtained. The thus obtained polymer had a number-average molecular weight of 11,500, a gas generation amount of 0.39% by weight, a residue amount of 5.9% by weight, and an MFR of 140 g/10 min.

### [Reference Example 3] Polymerization of PPS (PPS-3)

A linear PPS-3 was obtained in the same manner as in Reference Example 2, except without performing a curing or heat treatment at 200°C in an oxygen stream. The thus obtained polymer had a number-average molecular weight of 8,000, a gas generation amount of 0.44% by weight, a residue amount of 1.5% by weight, and an MFR of 720 g/10 min.

### [Reference Example 4] Polymerization of PPS (PPS-4)

To an autoclave, 4.67 kg of 30% aqueous sodium hydrosulfide solution (sodium hydrosulfide: 25 mol), 2.00 kg of 50% sodium hydroxide (sodium hydroxide: 25 mol), and 8 kg of N-methyl-2-pyrrolidone (NMP) were added, and these materials were slowly heated to 205°C with stirring, and 4.11 kg of distillate water containing 3.8 kg of water was removed. Subsequently, 3.75 kg (25.5 mol) of 1,4-dichlorobenzene and 2 kg of NMP were added to the residual mixture, and the resultant was heated at 230°C for 1 hour and then at 260°C for 30 minutes. The resulting reaction product was washed with heated water five times and then dried under reduced pressure at 80°C for 24 hours, whereby a powder-form linear PPS-4 having a number-average molecular weight of 3,700 was obtained. The thus obtained polymer had a number-average molecular weight of 3,700, a gas generation amount of 0.54% by weight, a residue amount of 1.3% by weight, and an MFR of 9,570 g/10 min.

### [Reference Example 5] Polymerization of PPS (PPS-5)

To a 70-L autoclave equipped with a stirrer, 8,267.37 g (70.0 mol) of 47.5% sodium hydrosulfide, 2,962.50 g (71.10 mol) of 96% sodium hydroxide, 11,434.50 g (115.50 mol) of N-methyl-2-pyrrolidone (NMP), 516.60 g (6.30 mol) of sodium acetate, and 10,500 g of ion exchanged water were added. These materials were slowly heated to 230°C over a period of about 3 hours at normal pressure in a nitrogen stream and, after 14,780.1 g of water and 280 g of NMP were distilled off, the reaction vessel was cooled to 160°C. The amount of water remaining in the system per 1 mol of the added alkali metal sulfide was 1.06 mol, including the amount of water consumed by hydrolysis of NMP. In addition, the amount of scattered hydrogen sulfide was 0.017 mol per 1 mol of the added alkali metal sulfide.

Next, 10,363.50 g (70.5 mol) ofp-dichlorobenzene and 9,078.30 g (91.7 mol) of NMP were added, and the reaction vessel was hermetically sealed under nitrogen gas, heated to 270°C at a rate of 0.6°C/min with stirring at 240 rpm, and then maintained at 270°C for 140 minutes. Subsequently, while cooling the reaction vessel to 250°C at a rate of 1.3°C/min, 2,520 g (140 mol) of ion exchanged water was injected into the autoclave, followed by cooling to 200°C at a rate of 1.0°C/min and subsequent rapid cooling to about room temperature.

The content was taken out and diluted with 26,300 g of NMP, and the resultant was separated into a solvent and a solid by filtration through a sieve (80 mesh), after which the thus obtained particles were washed with 31,900 g of NMP and recovered by filtration. These particles were washed several times with 56,000 g of ion exchanged water and recovered by filtration, and then washed with 70,000 g of a 0.05%-by-weight aqueous acetic acid solution and recovered by filtration. The particles were further washed with 70,000 g of ion exchanged water and recovered by filtration, after which the resulting water-containing PPS particles were dried with hot air at 80°C and then dried under reduced pressure at 120°C, whereby a linear PPS-5 was obtained. The thus obtained polymer had a number-average molecular weight of 7,700, a gas generation amount of 0.11% by weight, a residue amount of 0.02% by weight, and an MFR of 580 g/10 min.

### [Reference Example 6] Polymerization of PPS (PPS-6)

A linear PPS-6 was obtained in the same manner as in Reference Example 5, except that sodium acetate was added in an amount of 1,722.00 g (21.00 mol). The thus obtained polymer had a number-average molecular weight of 8,900, a gas generation amount of 0.09% by weight, a residue amount of 0.02% by weight, and an MFR of 210 g/10 min.

### [Compositions Used in Examples and Comparative Examples]

The following compositions were used in Examples and Comparative Examples.
(A) PPS Resins
   PPS-1: PPS resin polymerized by the method described in Reference Example 1
   PPS-2: PPS resin polymerized by the method described in Reference Example 2
   PPS-3: PPS resin polymerized by the method described in Reference Example 3
   PPS-4: PPS resin polymerized by the method described in Reference Example 4
   PPS-5: PPS resin polymerized by the method described in Reference Example 5
   PPS-6: PPS resin polymerized by the method described in Reference Example 6
(B) Glass Fibers
   B: chopped strand (T-760H manufactured by Nippon Electric Glass Co., Ltd., length: 3 mm, average fiber diameter: 10.5 µm)
(C) Silane Compounds
   C-1: 3-aminopropyltriethoxysilane (KBE-903, manufactured by Shin-Etsu Chemical Co., Ltd.)
   C-2: 3-isocyanate propyltriethoxysilane (KBE-9007, manufactured by Shin-Etsu Chemical Co., Ltd.)
(D) Additives
   D-1: polyethylene (HI-ZEX 7000FP, manufactured by Mitsui Chemicals, Inc.)
   D-2: amide compound (LIGHT AMIDE WH500, manufactured by Kyoeisha Chemical Co., Ltd.)
   D-3: organic crystal nucleating agent (polyether ether ketone PEEK450-PF, manufactured by Victrex-MC)

### [Measurement and Evaluation Methods]

The following measurement and evaluation methods were employed in Examples and Comparative Examples.

### (1) Tensile Strength

The tensile strength was measured in accordance with ISO 527-1 and 527-2 (2012). Specifically, the measurement was carried out as follows. Pellets of the PPS resin composition of the present invention were dried at 130°C for 3 hours using a hot air dryer, subsequently supplied to an injection molding machine (SE-50D, manufactured by Sumitomo Heavy Industries, Ltd.) set at a cylinder temperature of 310°C and a mold temperature of 145°C, and then injection-molded using a mold having the Type A1 test piece shape (4 mm-thick) prescribed in ISO 20753 (2008) in a condition where the molten resin passing through a cross-section of the central parallel portion had an average velocity of 400 ± 50 mm/s, whereby a test piece was obtained. This test piece was conditioned for 16 hours under a temperature of 23°C and a relative humidity of 50%, after which the tensile strength was measured in accordance with ISO 527-1 and 527-2 (2012) in a 23°C atmosphere having a relative humidity of 50% under the following conditions: chuck distance = 115 mm, test speed = 5 mm/min. A tensile strength of 185 MPa or higher is regarded as a level that does not cause any practical problem for a product; however, a larger tensile strength value means superior mechanical strength and is thus more preferred.

### (2) Tensile Strength Retention Rate

A coolant was prepared by diluting Volkswagen genuine LLC (G13) with distilled water into a 50%-by-weight aqueous solution. A test piece having the Type A1 test piece shape (4 mm-thick) prescribed in ISO 20753 was immersed in the coolant at a temperature of 150°C for 500 hours. Subsequently, the liquid adhered to the test piece was wiped off, and the test piece was conditions conditioned for 16 hours under a temperature of 23°C and a relative humidity of 50%, after which the tensile strength was measured in accordance with ISO 527-1 and 527-2 in a 23°C atmosphere having a relative humidity of 50% under the following conditions: chuck distance = 115 mm, test speed = 5 mm/min. A value calculated from [(tensile strength after immersion in coolant/tensile strength measured in (1)] was expressed in percentage, and this value was defined as the tensile strength retention rate. A tensile strength retention rate of 75% or higher is regarded as a level that does not cause any practical problem for a product; however, a higher tensile strength retention rate means superior coolant resistance and is thus more preferred.

### (3) Mold Deposit Property

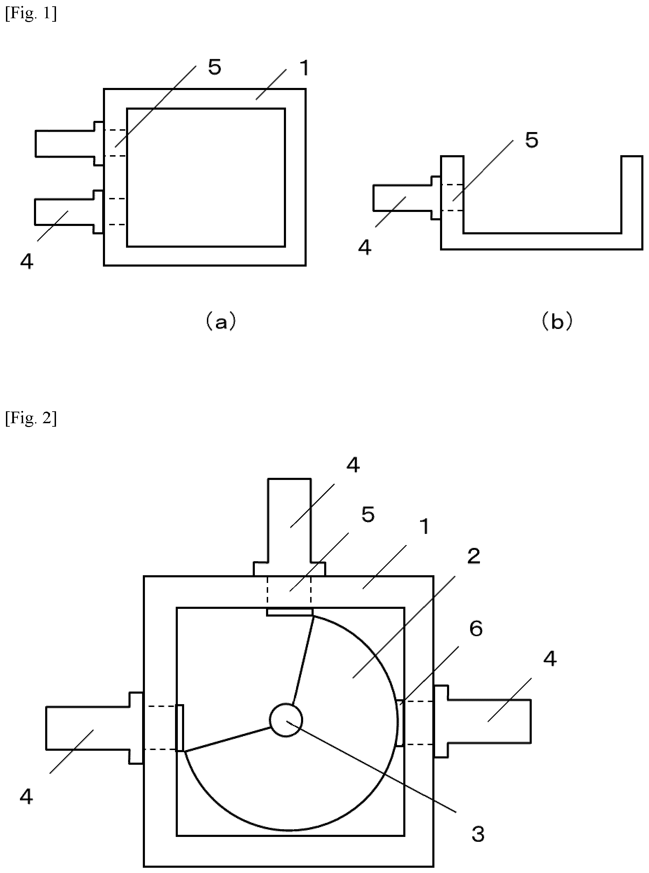

Using a gas evaluation mold of the molded article illustrated in FIG. 1 (molded article size: 55 mm in length, 20 mm in width, 2 mm in thickness; gate size: 2 mm in width, 1 mm in thickness (side gate); gas vent portion: 20 mm in maximum length, 10 mm in width, 5 µm in depth), continuous molding was performed at a cylinder temperature of 330°C, a mold temperature of 130°C, and an injection rate of 100 mm/s, with the injection pressure being set in a range of 50 to 80 MPa such that the filling time of each resin composition was 0.4 seconds. The condition of mold contamination in the mold gas vent portion was visually observed at 10-shot intervals (used molding machine: "SE-30D" manufactured by Sumitomo Heavy Industries, Ltd.). When the number of shots before adhesion is 100 or more, it is regarded that the resin composition is of a practically useable level; however, a larger number of shots means superior mold deposit property and is thus more preferred.

### (4) Weld Strength

An ASTM No. 4 dumbbell test piece (1.6 mmt) having gates at respective ends and a weld line near the center of the test piece was molded using an injection molding machine at cylinder temperature of 320°C and a mold temperature of 135°C. Ten measurement samples were obtained, and the weld strength was measured under the following conditions: test speed = 10 mm/min, chuck distance = 64 mm. A weld strength of 65 MPa or higher is regarded as a level that does not cause any practical problem for a product; however, a larger weld strength value means superior mechanical strength and is thus more preferred.

### (5) Flowability

The flow length was measured by molding a resin composition of interest using a 1 mm-thick spiral flow mold under the following conditions: cylinder temperature = 320°C, mold temperature = 140°C, injection rate = 230 mm/sec, injection pressure = 98 MPa, injection time = 5 seconds, and cooling time = 15 seconds (used injection molding machine: "SE-30D" manufactured by Sumitomo Heavy Industries, Ltd.). A larger value of the flow length means superior flowability.

### (6) Melt Crystallization Peak Temperature

About 10 mg of sample was collected from pellets of a PPS resin composition of interest. Using a differential scanning calorimeter DSC-7 manufactured by PerkinElmer Co., Ltd., the sample was heated at a heating rate of 20°C/min, maintained at 340°C for 5 minutes, and then cooled at a rate of 20°C/min and, in this process, the crystallization peak temperature was measured and defined as the melt crystallization peak temperature.

### [Production of PPS Resin Compositions]

### (Examples 1 to 5 and Comparative Examples 1 to 10)

Using a twin-screw extruder having an intermediate addition port of 26 mm in diameter (TEM-26, manufactured by Toshiba Machine Co., Ltd.) which was set at a cylinder temperature of 320°C and a screw rotation speed of 400 rpm, 100 parts by weight of the PPS resin(s) (A) obtained in Reference Examples 1 to 6 was added through the raw material supply port at the weight ratio shown in Table 1 and brought into a molten state, and the inorganic filler (B) was further supplied through the intermediate addition port at the weight ratio shown in Table 1. The resulting mixture was melt-kneaded at extrusion rate of 30 kg/hr to obtain pellets. The thus obtained pellets were used for the above-described evaluation of various properties. The results thereof are shown in Tables 1 and 2.

**[Table 1]**

| | | Units | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| PPS | PPS-1 | Parts by Weight | 100 | 50 | 50 | 50 | 50 | | | | | |
| | PPS-2 | Parts by Weight | | 50 | 50 | 50 | 50 | 100 | | | 50 | |
| | PPS-3 | Parts by Weight | | | | | | | 100 | | | |
| | PPS-4 | Parts by Weight | | | | | | | | 100 | 50 | |
| | PPS-5 | Parts by Weight | | | | | | | | | | 100 |
| | PPS-6 | Parts by Weight | | | | | | | | | | |
| Glass Fiber | B | Parts by Weight | 70 | 70 | 70 | 70 | 70 | 70 | 70 | 70 | | 70 |
| Silane Compound | C-1 | Parts by Weight | | | 1 | | | | | | | |
| | C-2 | Parts by Weight | 1 | 1 | | 1 | 1 | 1 | 1 | 1 | | 1 |
| Additives | D-1 | Parts by Weight | | | | 1 | | 1 | 1 | 1 | | 1 |
| | D-2 | Parts by Weight | 1 | 1 | 1 | | 1 | | | | | |
| | D-3 | Parts by Weight | | | | | 0.1 | | | | | |
| Evaluation Results | Number Average Molecular Weight of PPS | - | 8,500 | 9,800 | 9,800 | 9,800 | 9,800 | 11,500 | 8,000 | 3,700 | 5,600 | 7,700 |
| | Residue Amount of PPS | Weight % | 2.1 | 4.0 | 4.0 | 4.0 | 4.0 | 5.9 | 1.5 | 1.3 | 3.6 | 0.0 |
| | Tensile Strength of Injection Molded Article of Resin Composition | MPa | 190 | 190 | 190 | 190 | 190 | 200 | 185 | 175 | 185 | 185 |
| | Tensile Strength Retention Rate of Injection Molded Article of Resin Composition | % | 85 | 80 | 80 | 85 | 85 | 70 | 70 | 60 | 70 | 75 |
| | Mold Deposit Property | - | 150 | 170 | 110 | 110 | 170 | 220 | 70 | 50 | 70 | 300 |
| | Melt Crystallization Peak Temperature of Resin Composition | °C | 215 | 220 | 220 | 220 | 235 | 225 | 210 | 210 | 220 | 215 |
| | Weld Strength of Injection Molded Article of Resin Composition | MPa | 65 | 70 | 70 | 70 | 75 | 75 | 60 | 55 | 60 | 80 |
| | Flowability of Resin Composition | mm | 130 | 115 | 115 | 115 | 115 | 100 | 140 | 180 | 140 | 100 |

**[Table 2]**

| | | Units | Comparative Example 6 | Comparative Example 7 | Comparative Example 8 | Comparative Example 9 | Comparative Example 10 |
|---|---|---|---|---|---|---|---|
| PPS | PPS-1 | Parts by Weight | | 50 | 50 | 50 | 50 |
| | PPS-2 | Parts by Weight | | 50 | 50 | 50 | 50 |
| | PPS-3 | Parts by Weight | | | | | |
| | PPS-4 | Parts by Weight | | | | | |
| | PPS-5 | Parts by Weight | | | | | |
| | PPS-6 | Parts by Weight | 100 | | | | |
| Glass Fiber | B | Parts by Weight | 70 | 20 | 150 | 70 | 70 |
| Silane Compound | C-1 | Parts by Weight | | | | | |
| | C-2 | Parts by Weight | 1 | 1 | 1 | | 5 |
| Additives | D-1 | Parts by Weight | | | | | |
| | D-2 | Parts by Weight | 1 | 1 | 1 | 1 | 1 |
| | D-3 | Parts by Weight | | | | | |
| Evaluation Results | Number Average Molecular Weight of PPS | - | 8,900 | 9,800 | 9,800 | 9,800 | 9,800 |
| | Residue Amount of PPS | Weight % | 0.0 | 4.0 | 4.0 | 4.0 | 4.0 |
| | Tensile Strength of Injection Molded Article of Resin Composition | MPa | 185 | 150 | 180 | 185 | 190 |
| | Tensile Strength Retention Rate of Injection Molded Article of Resin Composition | % | 75 | 80 | 80 | 65 | 85 |
| | Mold Deposit Property | - | 300 | 90 | 90 | 100 | 70 |
| | Melt Crystallization Peak Temperature of Resin Composition | °C | 215 | 215 | 215 | 215 | 215 |
| | Weld Strength of Injection Molded Article of Resin Composition | MPa | 80 | 75 | 65 | 60 | 75 |
| | Flowability of Resin Composition | mm | 90 | 125 | 85 | 150 | 85 |

### Industrial Applicability

A PPS resin composition obtained in the above-described manner has unknown properties of not only exhibiting both a high mechanical strength and a high coolant resistance, but also inhibiting the generation of mold deposit; therefore, the PPS resin composition is useful for automotive cooling parts, particularly small-sized and complex-shaped automotive cooling parts that include a combination of plural components.

### Description of Symbols

1. housing
2. valve
3. axis
4. pipe
5. hole
6. packing
7. cavity
8. gate

## Claims

1. A polyphenylene sulfide resin composition for automotive cooling parts, comprising, with respect to 100 parts by weight of a polyphenylene sulfide resin (A):
30 to 110 parts by weight of glass fibers (B); and
0.1 to 3 parts by weight of a silane compound (C) comprising a functional group selected from an amino group and an isocyanate group,
wherein
the polyphenylene sulfide resin (A) has a number-average molecular weight of 7,000 to 14,000, the number-average molecular weight being measured by the method of the description, the polyphenylene sulfide resin (A) including a polyphenylene sulfide resin that has been heat treated under an oxygen concentration of 2% by volume or lower, at a temperature of 210 to 270°C for a period of 0.2 to 50 hours, and gives a residue amount of 2.0 to 5.0% by weight when dissolved in 20-fold amount by weight of 1-chloronaphthalene at 250°C for 5 minutes and subsequently subjected to heat pressure filtration through a PTFE membrane filter having a pore size of 1 µm.

2. The polyphenylene sulfide resin composition according to claim 1, having a melt crystallization peak temperature of 230°C or higher, the melt crystallization peak temperature being measured by the method of the description.

3. The polyphenylene sulfide resin composition according to claim 1 or 2, satisfying both of the following conditions (i) and (ii):
(i) a Type A1 test piece defined in ISO 20753 (hereinafter, referred to as "ISO test piece"), which is obtained by injection-molding the polyphenylene sulfide resin composition, has a tensile strength of 190 MPa or higher as measured in accordance with ISO 527-1 and 527-2 at a tensile speed of 5 mm/min and an atmospheric temperature of 23°C; and
(ii) when the ISO test piece is immersed in a 150°C coolant for 500 hours and subsequently measured in accordance with ISO 527-1 and 527-2 at a tensile speed of 5 mm/min and an atmospheric temperature of 23°C, the ISO test piece has a tensile strength retention rate is 80% or higher.

4. An automotive cooling part, comprising the polyphenylene sulfide resin composition according to any one of claims 1 to 3.

5. An automotive cooling part, comprising a combination of:
a housing obtained by injection-molding the polyphenylene sulfide resin composition according to any one of claims 1 to 3; and
at least two pipes.

6. An automotive cooling part, comprising a combination of:
a housing obtained by injection-molding the polyphenylene sulfide resin composition according to any one of claims 1 to 3;
a valve; and
at least three pipes.

7. Use of a polyphenylene sulfide resin composition according to any one of claims 1 to 3 for providing high mechanical strength and high coolant resistance and inhibiting the generation of mold deposit on an automotive cooling part.

8. Use according to claim 7, wherein the automotive cooling part is an automotive cooling part according to any one of claims 4 to 6.

9. A method for preparing a polyphenylene sulfide resin composition according to any one of claims 1 to 3, the method comprising preparing a polyphenylene sulfide resin, the preparation including a pre-processing step, a polymerization reaction step, a recovery step in which a solid PPS resin is recovered from the polymerization reaction step, and a post-treatment step, the post-treatment step comprising subjecting the polyphenylene sulfide resin to heat treatment under an oxygen concentration of 2% by volume or lower, at a temperature of 210 to 270°C for a period of 0.2 to 50 hours.

## Patentansprüche

1. Polyphenylensulfid-Harz-Zusammensetzung für Kraftfahrzeug-Kühlteile, die bezogen auf 100 Gewichtsteile eines Polyphenylensulfid-Harzes (A) Folgendes umfasst:
30 bis 110 Gewichtsteile Glasfasern (B); und
0,1 bis 3 Gewichtsteile einer Silan-Verbindung (C), die eine aus einer Amino-Gruppe und einer Isocyanat-Gruppe ausgewählte funktionelle Gruppe umfasst,
wobei
das Polyphenylensulfid-Harz (A) ein zahlenmittleres Molekulargewicht von 7.000 bis 14.000 aufweist, wobei das zahlenmittlere Molekulargewicht nach dem Verfahren der Beschreibung gemessen wird, wobei das Polyphenylensulfid-Harz (A) ein Polyphenylensulfid-Harz umfasst, das unter einer Sauerstoff-Konzentration von 2 Vol.-% oder weniger bei einer Temperatur von 210 °C bis 270 °C über einen Zeitraum von 0,2 bis 50 Stunden wärmebehandelt wurde und das eine Restmenge von 2,0 bis 5,0 Gew.-% ergibt, wenn es bei 250 °C 5 min lang in der 20-fachen Gewichtsmenge von 1-Chlornaphthalin gelöst und anschließend einer Heißdruckfiltration durch ein PTFE-Membranfilter mit einer Porengröße von 1 µm unterzogen wird.

2. Polyphenylensulfid-Harz-Zusammensetzung nach Anspruch 1, die eine Schmelzkristallisationspeak-Temperatur von 230 °C oder mehr aufweist, wobei die Schmelzkristallisationspeak-Temperatur nach dem Verfahren der Beschreibung gemessen wird.

3. Polyphenylensulfid-Harz-Zusammensetzung nach Anspruch 1 oder 2, die beide der folgenden Bedingungen (i) und (ii) erfüllt:
(i) ein Probekörper vom Typ A1 gemäß ISO 20753 (hierin im Folgenden als "ISO-Probekörper" bezeichnet), der durch Spritzgießen der Polyphenylensulfid-Harz-Zusammensetzung erhalten wird und eine Zugfestigkeit von 190 MPa oder mehr aufweist, die gemäß ISO 527-1 und 527-2 bei einer Zuggeschwindigkeit von 5 mm/min und einer Atmosphärentemperatur von 23 °C gemessen wird; und
(ii) wenn der ISO-Probekörper 500 Stunden lang in ein Kühlmittel mit 150 °C eingetaucht wird und anschließend gemäß ISO 527-1 und 527-2 bei einer Zuggeschwindigkeit von 5 mm/min und einer Atmosphärentemperatur von 23 °C gemessen wird, der ISO-Probekörper eine Zugfestigkeits-Retentionsrate von 80 % oder mehr aufweist.

4. Kraftfahrzeug-Kühlteil, das eine Polyphenylensulfid-Harz-Zusammensetzung nach einem der Ansprüche 1 bis 3 umfasst.

5. Kraftfahrzeug-Kühlteil, das eine Kombination aus Folgendem umfasst:
einem Gehäuse, das durch Spritzgießen einer Polyphenylensulfid-Harz-Zusammensetzung nach einem der Ansprüche 1 bis 3 erhalten wurde; und
zumindest zwei Rohren.

6. Kraftfahrzeug-Kühlteil, das eine Kombination aus Folgendem umfasst:
einem Gehäuse, das durch Spritzgießen einer Polyphenylensulfid-Harz-Zusammensetzung nach einem der Ansprüche 1 bis 3 erhalten wurde;
einem Ventil; und
zumindest drei Rohren.

7. Verwendung einer Polyphenylensulfid-Harz-Zusammensetzung nach einem der Ansprüche 1 bis 3 zur Bereitstellung von hoher mechanischer Festigkeit und hoher Kühlmittelbeständigkeit und zur Hemmung von Formablagerungen auf einem Kraftfahrzeug-Kühlteil.

8. Verwendung nach Anspruch 7, wobei das Kraftfahrzeug-Kühlteil ein Kraftfahrzeug-Kühlteil nach einem der Ansprüche 4 bis 6 ist.

9. Verfahren zur Herstellung einer Polyphenylensulfid-Harz-Zusammensetzung nach einem der Ansprüche 1 bis 3, wobei das Verfahren das Herstellen eines Polyphenylensulfid-Harzes umfasst, wobei das Herstellen einen Vorverarbeitungs-Schritt, einen Polymerisationsreaktions-Schritt, einen Gewinnungs-Schritt, bei dem festes PPS-Harz aus dem Polymerisationsreaktions-Schritt gewonnen wird, und einen Nachbehandlungs-Schritt umfasst, wobei der Nachbehandlungs-Schritt das Unterziehen des Polyphenylensulfid-Harzes einer Wärmebehandlung unter einer Sauerstoffkonzentration von 2 Vol.-% oder weniger bei einer Temperatur von 210 °C bis 270 °C für einen Zeitraum von 0,2 bis 50 Stunden umfasst.

## Revendications

1. Composition de résine de sulfure de polyphénylène pour pièces de refroidissement d'automobile, comprenant, par rapport à 100 parties en poids d'une résine de sulfure de polyphénylène (A) :
de 30 à 110 parties en poids de fibres de verre (B) ; et
de 0,1 à 3 parties en poids d'un composé de silane (C) comprenant un groupe fonctionnel choisi parmi un groupe amino et un groupe isocyanate,
dans laquelle
la résine de sulfure de polyphénylène (A) présente un poids moléculaire moyen en nombre de 7 000 à 14 000, le poids moléculaire moyen en nombre étant mesuré par le procédé de la description, la résine de sulfure de polyphénylène (A) incluant une résine de sulfure de polyphénylène qui a été traitée thermiquement sous une concentration en oxygène de 2 % en volume ou moins, à une température de 210 à 270°C pendant une période de 0,2 à 50 heures, et donne une quantité de résidu de 2,0 à 5,0 % en poids lorsqu'elle est dissoute dans une quantité de 20 fois son poids de 1-chloronaphtalène à 250°C pendant 5 minutes et ensuite soumise à une filtration sous pression thermique à travers une membrane filtrante en PTFE présentant une taille de pore de 1 µm.

2. Composition de résine de sulfure de polyphénylène selon la revendication 1, présentant une température de pic de cristallisation à l'état fondu de 23°C ou plus, la température de pic de cristallisation à l'état fondu étant mesurée par le procédé de la description.

3. Composition de résine de sulfure de polyphénylène selon la revendication 1 ou 2, satisfaisant aux deux conditions suivantes (i) et (ii) :
(i) une pièce d'essai de type A1 définie dans la norme ISO 20753 (ci-après dénommée « pièce d'essai ISO »), qui est obtenue par moulage par injection de la composition de résine de sulfure de polyphénylène, présente une résistance à la traction de 190 MPa ou plus telle que mesurée conformément à la norme ISO 527-1 et 527-2 à une vitesse de traction de 5 mm/min et une température atmosphérique de 23°C ; et
(ii) lorsque la pièce d'essai ISO est immergée dans un liquide de refroidissement à 150°C pendant 500 heures, puis mesurée conformément aux normes ISO 527-1 et 527-2 à une vitesse de traction de 5 mm/min et à une température atmosphérique de 23°C, la pièce d'essai ISO présente un taux de rétention de résistance à la traction de 80 % ou plus.

4. Pièce de refroidissement d'automobile, comprenant la composition de résine de sulfure de polyphénylène selon l'une quelconque des revendications 1 à 3.

5. Pièce de refroidissement d'automobile, comprenant une combinaison :
d'un boîtier obtenu par moulage par injection de la composition de résine de sulfure de polyphénylène selon l'une quelconque des revendications 1 à 3 ; et
d'au moins deux tuyaux.

6. Pièce de refroidissement d'automobile, comprenant une combinaison :
d'un boîtier obtenu par moulage par injection de la composition de résine de sulfure de polyphénylène selon l'une quelconque des revendications 1 à 3 ;
d'une vanne ; et
d'au moins trois tuyaux.

7. Utilisation d'une composition de résine de sulfure de polyphénylène selon l'une quelconque des revendications 1 à 3 pour fournir une résistance mécanique élevée et une résistance élevée au liquide de refroidissement et inhiber la génération de dépôt de moule sur une pièce de refroidissement d'automobile.

8. Utilisation selon la revendication 7, dans laquelle la pièce de refroidissement d'automobile est une pièce de refroidissement d'automobile selon l'une quelconque des revendications 4 à 6.

9. Procédé de préparation d'une composition de résine de sulfure de polyphénylène selon l'une quelconque des revendications 1 à 3, le procédé comprenant la préparation d'une résine de sulfure de polyphénylène, la préparation incluant une étape de prétraitement, une étape de réaction de polymérisation, une étape de récupération dans laquelle une résine de PPS solide est récupérée à partir de l'étape de réaction de polymérisation, et une étape de post-traitement, l'étape de post-traitement comprenant la soumission de la résine de sulfure de polyphénylène à un traitement thermique sous une concentration en oxygène de 2 % en volume ou moins, à une température de 210 à 270°C pendant une période de 0,2 à 50 heures.
